(19) Europäisches Patentamt
European Patent Office
Office européen des brevets

(11) **EP 4 632 602 A1**

(12) **EUROPEAN PATENT APPLICATION**

(43) Date of publication:
**15.10.2025 Bulletin 2025/42**

(21) Application number: **24216106.5**

(22) Date of filing: **28.11.2024**

(51) International Patent Classification (IPC):
**G06F 16/55** (2019.01)    **G06F 16/583** (2019.01)

(52) Cooperative Patent Classification (CPC):
**G06F 16/55; G06F 16/583**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.04.2024  IL 31200124**

(71) Applicants:
• **Fujitsu Limited**
  **Kawasaki-shi, Kanagawa 211-8588 (JP)**
• **B.G. Negev Technologies and Applications Ltd., at**
  **Ben-Gurion University**
  **8410501 Beer Sheva (IL)**

(72) Inventors:
• **SINGH, Inderjeet**
  **Slough, SL1 2BE (GB)**
• **VAINSHTEIN, Roman**
  **Slough, SL1 2BE (GB)**
• **ZOLFI, Alon**
  **8410501 Beer Sheva (IL)**
• **SHABTAI, Asaf**
  **Beer Sheva, 8410501 (GB)**
• **BROKMAN, Jonathan**
  **Slough, SL1 2BE (GB)**
• **HOFMAN, Omer**
  **Slough, SL1 2BE (GB)**
• **KASAHARA, Fumiyoshi**
  **Slough, SL1 2BE (GB)**
• **TSUJI, Kentaro**
  **Slough, SL1 2BE (GB)**
• **KOJIMA, Hisashi**
  **Slough, SL1 2BE (GB)**

(74) Representative: **Haseltine Lake Kempner LLP**
**Cheapside House**
**138 Cheapside**
**London EC2V 6BJ (GB)**

(54) **IMAGE PROCESSING MODEL**

(57)    A method comprising generating image descriptions of images in an original training set of images; determining, using at least one LLM, at least one domain and/or class which is under-represented in the original training set; generating, using a second LLM and based on the determination of the at least one domain and/or class, at least one instruction for a third LLM to generate at least one text prompt; generating, using the third LLM and based on the at least one instruction, the at least one text prompt for a text-to-image model; generating, using the text-to-image model and based on the at least one text prompt, at least one synthetic image; and generating an enhanced training set of images for use in training an image processing machine learning, ML, model, the enhanced training set of images comprising the original training set of images and the at least one synthetic image.

FIGURE 3

EP 4 632 602 A1

**Description**

The present invention relates to an image processing model and to its training, and in particular to a computer-implemented method, a computer program, and an information programming apparatus.

Image retrieval is the process of searching for and retrieving images from a database of images. A query in an image retrieval task may be in the form of text or an image. Where the query is an image, the process involves searching for images similar to the query image.

Deep Metric Learning (DML) is a component of some image retrieval systems, with models trained to measure image similarity through embedding spaces optimized via loss functions like triplet, contrastive, and angular losses. These loss functions are governed by convergence theorems that ensure models learn to minimize intra-class variance while maximizing inter-class variance. However, generalization remains a critical challenge as DML models are prone to overfitting when trained or fine-tuned on limited datasets. Generalization limits may make DML models less accurate and more susceptible to adversarial attacks.

In light of the above, an improved methodology for training an image processing model is desired.

According to an embodiment of a first aspect there is disclosed herein a computer-implemented method comprising: generating, using an image-to-text model, image descriptions of images in an original training set of images; determining, using at least one large language model, LLM, and based on the image descriptions, at least one domain and/or class which is (unrepresented or) under-represented in the original training set; generating, using a second LLM and based on the determination of the at least one domain and/or class (which is unrepresented or under-represented in the original training set), at least one instruction for a third LLM to generate at least one text prompt; generating, using the third LLM and based on the at least one instruction, the at least one text prompt for a text-to-image model; generating, using the text-to-image model and based on the at least one text prompt, at least one synthetic image; and generating an enhanced training set of images for use in training an image processing machine learning, ML, model, the enhanced training set of images comprising the original training set of images and the at least one synthetic image.

Determining the at least one domain and/or class which is unrepresented or under-represented in the original training set may comprise: determining prevalent terms among the image descriptions; and inferring, using a first LLM and based on the prevalent terms, domains represented in the original training set and a number of images in the original training set representing each domain.

Determining the at least one domain and/or class which is unrepresented or under-represented in the original training set may comprise: determining that a domain represented in the original training set is under-represented if the number or proportion of images in the original training set representing the domain is below a domain threshold; and/or determining, using a fourth LLM, if at least one domain exists which is not represented by any of the images in the original training set, and if it is determined that at least one domain exists which is not represented by any of the images in the original training set, determining the at least one domain as at least one unrepresented domain.

Inferring, using the first LLM, the domains represented in the original training set and the number of images in the original training set representing each domain may comprise using metadata of the original training set.

The computer-implemented method may comprise extracting metadata from/associated with the original training set and optionally refining, using a fifth LLM, the extracted metadata for use in inferring the domains represented in the original training set and the number of images in the original training set representing each domain.

The metadata may comprise labels and/or label information associated with the images in the original training set.

Determining the at least one domain and/or class which is unrepresented or under-represented in the original training set may comprise determining, based on metadata and/or labels associated with the images, a number of images in the original training set associated with/representing each class.

Determining the at least one domain and/or class which is unrepresented or under-represented in the original training set may comprise: determining that a class represented in the original training set is under-represented if the number or proportion of images in the original training set representing the class is below a class threshold; and/or determining, using a sixth LLM, if at least one class exists which is not represented by any of the images in the original training set, and if it is determined that at least one class exists which is not represented by any of the images in the original training set, determining the at least one class as at least one unrepresented class.

Determining the number of images in the original training set associated with/representing each class may comprise using a seventh LLM.

Determining prevalent terms among the image descriptions may comprise using natural language processing, NLP techniques, to determine the prevalent terms.

Determining prevalent terms among the image descriptions may comprise: tokenizing the image descriptions; removing stop words from the tokenized image descriptions to provide cleaned image description tokens; assigning part-of-speech, POS, tags to the cleaned image description tokens; extracting nouns and verbs from the cleaned image description tokens based on the POS tags; and determining the n most frequently occurring nouns and verbs as the prevalent terms.

Generating the at least one instruction may comprise, when an under-represented or unrepresented class has been determined, generating an instruction naming the under-represented or unrepresented class; and when an under-represented or unrepresented domain has been determined, generating an instruction naming the under-represented or unrepresented domain.

Generating the at least one instruction may comprise generating at least one instruction for each class represented in the original training set.

Generating the at least one instruction may comprise, when an under-represented or unrepresented domain has been determined, generating an instruction for each class represented in the original training set, each instruction naming the under-represented or unrepresented domain.

Generating the at least one instruction may comprise generating an enhancement objective comprising context for the third LLM to use in generating the at least one text prompt and generating at least one reference description, each reference description naming a class and/or a domain.

Generating the at least one instruction may comprise generating an enhancement objective comprising context for the third LLM to use in generating the at least one text prompt and generating a reference description for each class represented in the original training set, each reference description naming the under-represented or unrepresented domain and/or specifying whether the class is an under-represented class.

Generating the at least one instruction may comprise generating an enhancement objective comprising context for the third LLM to use in generating the at least one text prompt and generating a reference description for each unrepresented class, each reference description naming the unrepresented class.

The at least one instruction and/or the enhancement objective and/or the at least one reference description may specify a number of text prompts to be generated.

Generating the at least one text prompt may comprise instructing the third LLM to generate a plurality of text prompts corresponding to each reference description and to use the enhancement objective as context for generating the text prompts.

Generating the at least one text prompt may comprise generating a plurality of text prompts corresponding to each instruction.

Generating the at least one text prompt may comprise generating the number of text prompts specified in each instruction/each reference description/the enhancement objective.

Generating the at least one text prompt may comprise generating the at least one text prompt so that the at least one text prompt includes the class and/or domain named in the at least one instruction.

Generating the at least one synthetic image comprises providing the at least one text prompt as input to the text-to-image model to generate a synthetic image for each of the at least one text prompt.

Generating the at least one synthetic image may comprise generating a synthetic set comprising a plurality of synthetic images, wherein the computer-implemented method may comprise performing a cleaning process comprising cleaning the synthetic set by removing any synthetic image determined to be an outlier to generate a cleaned synthetic set of synthetic images, and wherein the enhanced training set may comprise the original training set of images and the cleaned synthetic set of synthetic images.

Cleaning the synthetic set to generate the cleaned synthetic set may comprise: generating first embeddings of the images in the original training set; generating second embeddings of the synthetic images in the synthetic set which are associated with a class which is represented in the original training set; computing an average embedding for each class of images in the original training set (based on the labels/label information); for each class of images in the original training set, computing an average distance of distances of the first embeddings of the images of the class from the average embedding of the class; for each second embedding, comparing the distance between the second embedding and the average embedding for the corresponding class with a class outlier threshold which is based on the average distance for the corresponding class and, if the distance is greater than the class outlier threshold, removing the synthetic image corresponding to the second embedding from the synthetic set.

The class outlier threshold for a given class may comprise the average distance for the class multiplied by a diversity factor.

Generating the first and second embeddings may comprise using a (trained) deep metric learning model.

The image processing ML model may be configured to use the (trained) deep metric learning model.

Generating the first and second embeddings may comprise using a (trained) deep metric learning model used by the image processing ML model.

Generating the first and second embeddings may comprise extracting representations from the images concerned, the representations being the embeddings.

Computing the average embedding for each class may comprise computing an element-wise (arithmetic) mean of the first embeddings corresponding to the class.

The first (and second) embeddings may be (1-dimensional) vectors.

Computing the average distance for a given class may comprise computing the distances of the first embeddings of the images of the class from the average embedding of the class, and computing the average/mean of the computed distances.

Each distance may comprise a Euclidean distance or a cosine distance or a dot product distance.

The computer-implemented method may comprise performing a checking process comprising checking the cleaned synthetic set to determine whether additional synthetic images are required and, if it is determined that additional synthetic images are required, performing a cleaning compensation process comprising: generating, using the second LLM, at least one further instruction for the third LLM to generate at least one text prompt; generating, using the third LLM and based on the at least one further instruction, the at least one text prompt for the text-to-image model; generating, using the text-to-image model and based on the at least one text prompt, at least one further synthetic image (wherein the enhanced training set of images comprises the at least one further synthetic image).

Generating the at least one further instruction may comprise generating an enhancement objective comprising context for the third LLM to use in generating the at least one text prompt and generating at least one reference description, each reference description naming a class and/or a domain.

The at least one further instruction and/or the enhancement objective and/or the at least one reference description may specify a (new) number of text prompts to be generated.

Generating the at least one text prompt may comprise instructing the third LLM to generate a plurality of text prompts corresponding to each reference description and to use the enhancement objective as context for generating the text prompts.

Generating the at least one text prompt may comprise generating a plurality of text prompts corresponding to each further instruction.

Generating the at least one text prompt may comprise generating the number of text prompts specified in each further instruction/each reference description/the enhancement objective.

Generating the at least one text prompt may comprise generating the at least one text prompt so that the at least one text prompt includes the class and/or domain named in the at least one further instruction.

Generating the at least one synthetic image may comprise providing the at least one text prompt as input to the text-to-image model to generate an additional synthetic image for each of the at least one text prompt.

The computer-implemented method may comprise successively iterating/repeating the cleaning, checking, and cleaning compensation processes until it is determined in the checking process that no additional synthetic images are required or until a checking threshold number of iterations has been performed, and the enhanced training set may comprise the original training set of images and the cleaned synthetic set of synthetic images generated at each iteration of the cleaning process.

Checking the cleaned synthetic set to determine whether additional synthetic images are required may comprise: comparing the number of synthetic images in the cleaned synthetic set relating to each class and/or relating to each domain with a number of text prompts specified in the instruction or reference description or enhancement objective corresponding to the class or domain concerned; and for each class and/or for each domain, if it is determined that the number of synthetic images is smaller than the number of text prompts concerned, determining that additional synthetic images are required.

Generating the at least one further instruction may comprise generating at least one instruction corresponding to each class for which it is determined that additional synthetic images are required and/or corresponding to each domain for which it is determined that additional synthetic images are required.

The at least one instruction corresponding to a given class and/or corresponding to a given domain may specify a new number of text prompts according to the comparison between the number of synthetic images relating to the given class or domain and the (previous) number of text prompts in the preceding iteration.

The computer-implemented method may comprise performing a training feedback process comprising evaluating performance of a trained image processing ML model to determine whether further additional synthetic images are required, and, if it is determined that further additional synthetic images are required, performing a weak class compensation process comprising: generating, using the second LLM, at least one further (additional) instruction for the third LLM to generate at least one text prompt; generating, using the third LLM and based on the at least one further (additional) instruction, the at least one text prompt for the text-to-image model; and generating, using the text-to-image model and based on the at least one text prompt, at least one further additional synthetic image (wherein the enhanced training set of images comprises the at least one further additional synthetic image).

The training feedback process may comprise: training the image processing ML model using the enhanced training set of images to generate the trained image processing ML model; and evaluating performance of the trained image processing ML model using (a plurality of classes of) test images and when the performance of the trained image processing ML model is below a performance threshold in respect of any class of the test images, determining that further additional synthetic images are required and determining the class as at least one weak class.

The computer-implemented method may comprise generating a plurality of enhanced training sets corresponding respectively to a plurality of diversity factors, each enhanced training set comprising the original training set of images and a synthetic set of images generated using the corresponding diversity factor, and the training feedback process may comprise: training the image processing ML model separately using the plurality of enhanced training sets of images to generate a plurality of trained image processing ML models corresponding respectively to the plurality of enhanced training sets of images; evaluating performance of the plurality of trained image processing ML models and determining a best performing trained image processing ML model; and using the best performing trained image processing ML model and the corresponding enhanced training set of images in the determination of whether further additional synthetic images are required.

Generating the at least one further (additional) instruction may comprise generating, based on the at least one weak class, the at least one further (additional) instruction.

Generating the at least one further (additional) instruction may comprise generating the at least one further (additional) instruction naming the at least one weak class.

Generating the at least one further (additional) instruction may comprise generating an enhancement objective comprising context for the third LLM to use in generating the at least one text prompt and generating at least one reference description, each reference description naming a class and/or a domain.

The at least one further (additional) instruction and/or the enhancement objective and/or the at least one reference description may specify a (new) number of text prompts to be generated.

Generating the at least one text prompt may comprise instructing the third LLM to generate a plurality of text prompts corresponding to each reference description and to use the enhancement objective as context for generating the text prompts.

Generating the at least one text prompt may comprise generating a plurality of text prompts corresponding to each further (additional) instruction.

Generating the at least one text prompt may comprise generating the number of text prompts specified in each further (additional) instruction/each reference description/the enhancement objective.

Generating the at least one text prompt may comprise generating the at least one text prompt so that the at least one text prompt includes the class and/or domain named in the at least one further (additional) instruction.

Generating the at least one further additional synthetic image may comprise providing the at least one text prompt as input to the text-to-image model to generate a further additional synthetic image for each of the at least one text prompt.

The computer-implemented method may comprise successively iterating/repeating the training feedback process and the weak class compensation process until it is determined in the training feedback process that no further additional synthetic images are required or until a training threshold number of iterations has been performed (and the enhanced training set may comprise the original training set of images and the further additional synthetic images generated at each iteration of the weak class compensation process).

Evaluating performance may comprise computing a recall@k metric.

The computer-implemented method may comprise training the image processing ML model using the enhanced training set of images.

The computer-implemented method may comprise using the image processing ML model after training.

The image processing ML model may comprise an image retrieval model.

The image retrieval model may be for searching among video frames for at least one image (most) similar to a query image.

The query image may comprise an object and the video frames may comprise video frames from a surveillance video.

The query image may comprise a vehicle and/or the video frames may comprise video frames from a traffic camera video.

The image retrieval model may be for face recognition.

According to an embodiment of a second aspect there is disclosed herein a computer program which, when run on a computer, causes the computer to carry out a method comprising: generating, using an image-to-text model, image descriptions of images in an original training set of images; determining, using at least one large language model, LLM, and based on the image descriptions, at least one domain and/or class which is (unrepresented or) under-represented in the original training set; generating, using a second LLM and based on the determination of the at least one domain and/or class (which is unrepresented or under-represented in the original training set), at least one instruction for a third LLM to generate at least one text prompt; generating, using the third LLM and based on the at least one instruction, the at least one text prompt for a text-to-image model; generating, using the text-to-image model and based on the at least one text prompt, at least one synthetic image; and generating an enhanced training set of images for use in training an image processing machine learning, ML, model, the enhanced training set of images comprising the original training set of images and the at least one synthetic image.

According to an embodiment of a third aspect there is disclosed herein an information processing apparatus comprising a memory and a processor connected to the memory, wherein the processor is configured to: generate, using an image-to-text model, image descriptions of images in an original training set of images; determine, using at least one large language model, LLM, and based on the image descriptions, at least one domain and/or class which is (unrepresented or) under-represented in the original training set; generate, using a second LLM and based on the determination of the at least one domain and/or class (which is unrepresented or under-represented in the original training set), at least one instruction for a third LLM to generate at least one text prompt; generate, using the third LLM and based on the at least one instruction, the at least one text prompt for a text-to-image model; generate, using the text-to-image model and based on the at least one text prompt, at least one synthetic image; and generate an enhanced training set of images for use in training an image processing machine learning, ML, model, the enhanced training set of images comprising the original training set of images and the at least one synthetic image.

Features relating to any aspect/embodiment may be applied to any other aspect/embodiment.

Reference will now be made, by way of example, to the accompanying drawings, in which:

Figure 1 is a diagram useful for understanding image processing;
Figure 2 is a diagram useful for understanding e image processing;
Figure 3 is a diagram illustrating a system;
Figure 4 is a diagram illustrating modules of a system;
Figure 5 is a diagram illustrating modules of a system;
Figure 6 is a diagram illustrating operations of a module;
Figure 7 is a diagram illustrating operations of a module;
Figure 8 is a diagram illustrating a method;
Figure 9 is a diagram illustrating a method;
Figure 10 is a diagram illustrating a table;
Figure 11 is a diagram illustrating a table;
Figure 12 is a diagram illustrating a table;
Figure 13 is a diagram illustrating a table;
Figure 14 is a diagram illustrating a table;
Figure 15 is a diagram illustrating graphs;
Figure 16 is a diagram illustrating graphs;
Figure 17 is a diagram illustrating graphs;
Figure 18 is a diagram illustrating graphs;
Figure 19 is a diagram illustrating a table;
Figure 20 is a diagram illustrating a table;
Figure 21 is a diagram illustrating graphs;
Figure 22 is a diagram illustrating a table; and
Figure 23 is a diagram illustrating an apparatus.

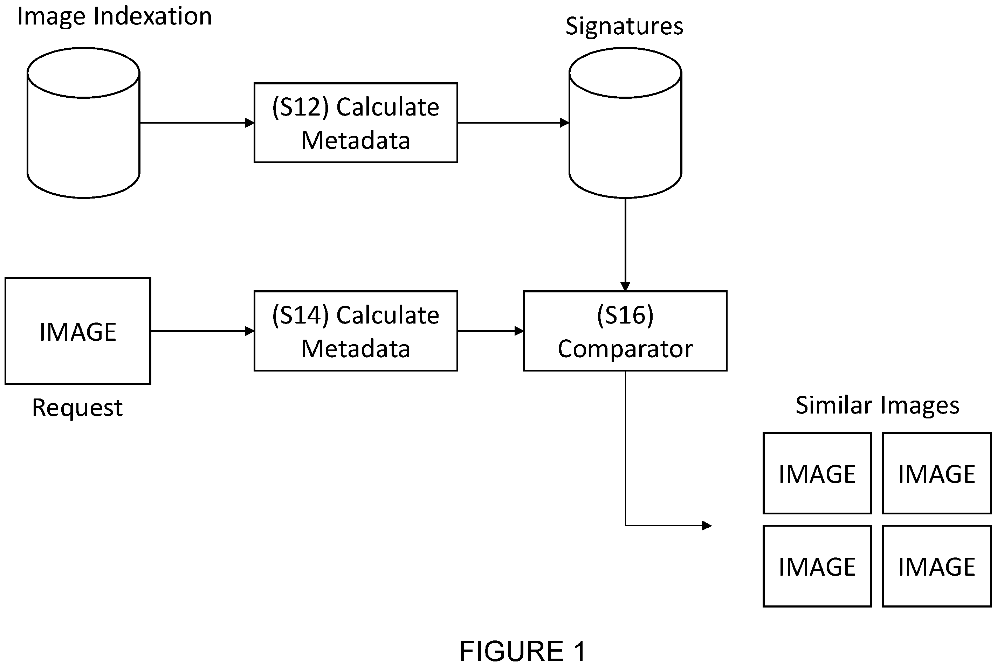

Figure 1 is a diagram illustrating an overview of a standard image retrieval framework useful for understanding the present disclosure. In the image retrieval framework, in a step S12 metadata is calculated based on images stored in a database (image indexation). The output of step S12 comprises signatures based on the images in the database. In step S14 metadata is calculated based on an input image which constitutes a query/request. The output of the step S14 comprises a signature of the input image. In the step S16 a comparator compares the signature of the input image with a plurality of signatures of the stored images and retrieves similar images among the images stored in the database. Here, "metadata calculation" refers to the extraction of embeddings using a DNN, after which the comparator computes the similarity between the embeddings of database images and the query image embedding. In contrast, in the description below "metadata" is used to refer to auxiliary information about data. The DNN and comparator functions are learned through deep metric learning techniques. The process of retrieving similar images (in this case, using deep metric learning) constitutes image retrieval

Image retrieval may be considered the process of searching and retrieving digital images from a large database using queries. Queries can be images or texts. In the example overview in Figure 1 the query is an image. Image retrieval may use deep metric learning for the image search.

Deep Metric Learning (DML) involves learning a function to assure less distance in a continuous latent embedding space between similar input pairs (of images). Unlike classification systems assigning a discrete label, DML models assign a position in a continuous embedding space to each image.

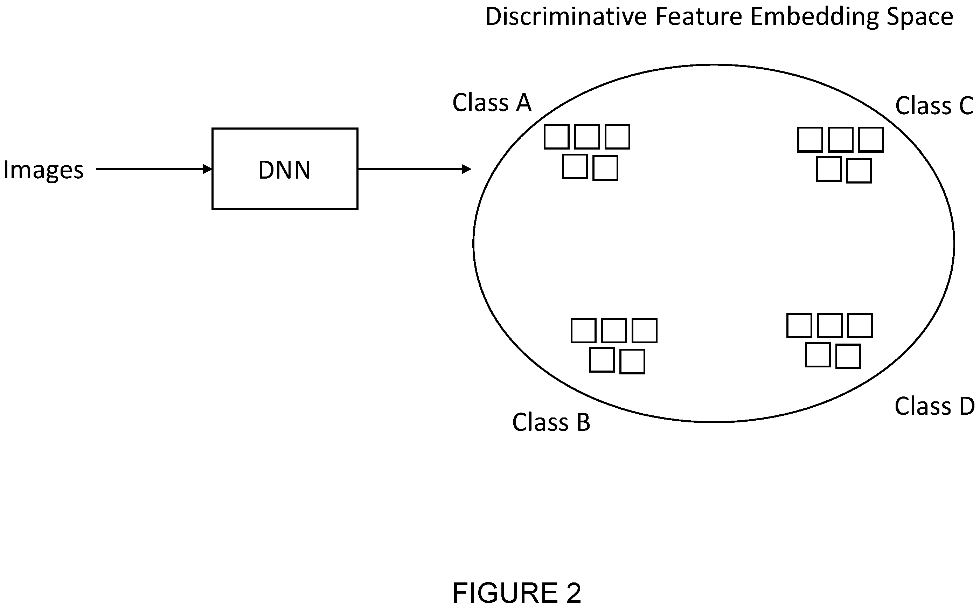

Figure 2 is a diagram illustrating an overview of the concept of DML. In Figure 2, a deep neural network (DNN) receives images and outputs embeddings corresponding to the images. As can be seen in Figure 2, the DNN (which is a DML model) assigns a position in a continuous embedding space ("discriminative feature embedding space" in Figure 2) to each image. In Figure 2, the DNN classifies the images into classes A, B, C, and D based on their proximity one another in the discriminative feature embedding space.

The effectiveness of DML models depend on the generalizability property.

Generalizability:

- The ability of a model to perform well on new, previously unseen data; reflecting its capacity to capture universal patterns rather than memorizing specific training examples.
- The better the generalizability, lesser the overfitting.
- The lesser the overfitting, the better the clean data accuracy and adversarial robustness of the image retrieval models.

Existing DML models for image retrieval suffer from Limited generalizability. The scarcity of diverse data (insufficient training information) is a primary contributor to limited generalizability. Limited generalizability leads to poor clean data performance, poor out-of-distribution adaptation, and vulnerability to adversarial attacks. Vulnerability to adversarial attacks is primarily due to the high sensitivity of the DML to the training data and the limited generalizability of the DML models.

Implementations of the present invention disclosed herein may be referred to as RobustRetrieVAL. RobustRetrieVAL, standing for Robust image Retrieval leveraging a combination of large Vision And Language models, is a framework representing specific implementations disclosed herein. RobustRetrieVAL is a multi-modal framework to refine the training process of image retrieval models. The framework automates synthetic data generation to address diversity scarcity, class- and domain-imbalances in datasets for training. It crafts real-world representative data that bolsters model generalization.

RobustRetrieVAL may be considered a framework to enhance DML model generalizability by automating synthetic data augmentation in an LLM-guided environment with Large Vision Models. RobustRetrieVAL involves detecting training data weaknesses and training deficiencies and addressing them by generating targeted synthetic data.

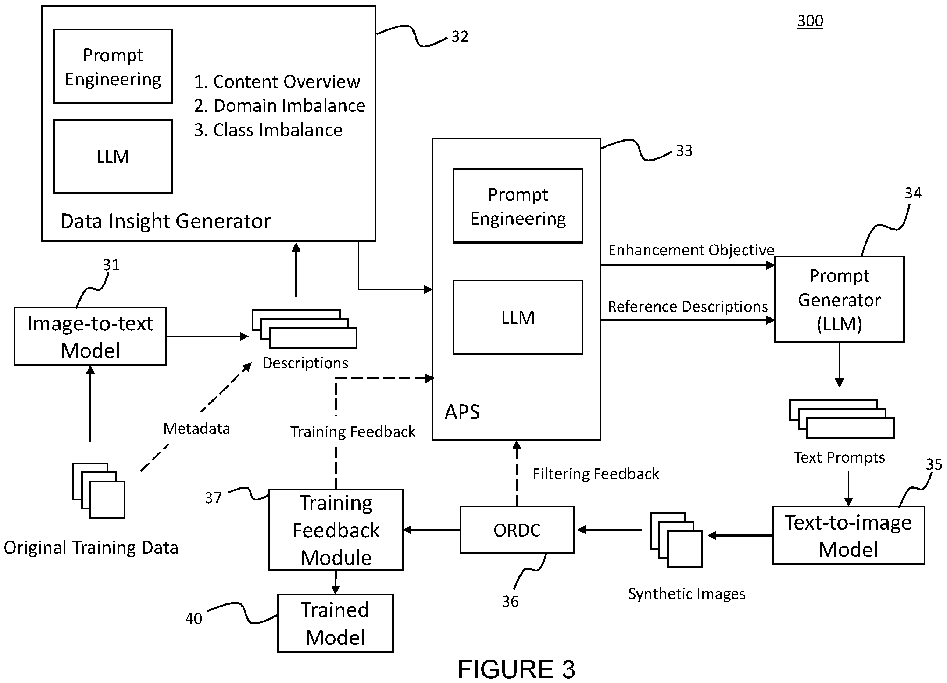

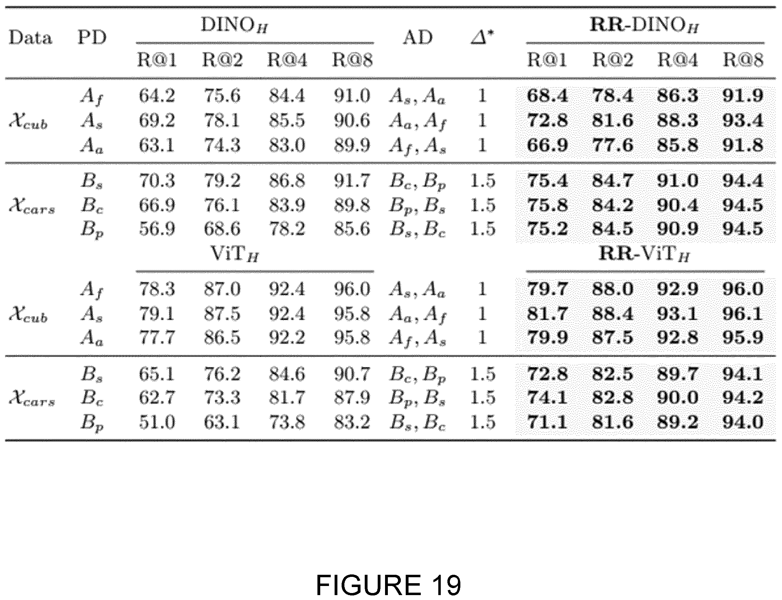

Figure 3 is a diagram of a system 300 according to a particular implementation of the present invention. The system 300 may be considered a framework representing a method, and the components of the system 300 may be considered modules. The modules may be implemented on a computer/device (e.g. as discussed with reference to Figure 19).

The system 300 comprises an image-to-text model 31, a data insight generator 32, an augmentation protocol selector (APS) 33, a prompt generator 34, a text-to-image model 35, an Outlier Removal and Diversity Control (ORDC) module 36, and a training feedback module 37. The output of the system 300 is a trained model 40 (which may be considered part of the system 300). The system 300 may be considered an example of the RobustRetrieVAL framework.

As partly mentioned above, the system 300 comprises:

- The Data Insight Generator 32 to analyze the training data information transformed in text space while detecting class and domain distribution discrepancies, and other potential missing augmentable information, to guide the subsequent pipeline for targeted synthetic data generation. That is, the Data Insight Generator 32 extracts metadata for semantic pattern analysis and for discovering data weaknesses.
- The Augmentation Protocol Selector (APS) 33 which dynamically defines protocols for augmentation, ensuring that the synthetic data is diverse and informative. That is, the APS 33 strategizes and controls data enhancements.
- The text-to-image model 35 for producing images from generated text descriptions (prompts).
- The Outlier Removal and Diversity Control (ORDC) module 36 which then further refines the transformed image data for text descriptions defined by APS, aligning it with the original dataset's distribution and maintaining semantic consistency. That is, the ORDC module 36 is for optimizing synthetic data quality.
- The training feedback module 37 for adjusting and updating augmentation schema based on filtering losses and model performance.

The operations of the modules of the system 300 will now be described in more detail.

Original training data (may be referred to as an original training set of images) is input to the image-to-text model 31. The original training data may comprise, for example, in some implementations, standard image retrieval benchmarks (Wah, C., Branson, S., Welinder, P., Perona, P., & Belongie, S. (2011), Tech. Rep. No. CNS-TR-2011-001, California Institute of Technology; and/or Krause, J., Stark, M., Deng, J., & Fei-Fei, L. (2013), 3D Object Representations for Fine-Grained Categorization, In 4th International IEEE Workshop on 3D Representation and Recognition (3dRR-13) (pp. 1-7). Sydney, Australia; Song, H. O., Xiang, Y., Jegelka, S., & Savarese, S. (2015), Deep metric learning via lifted structured feature embedding, CoRR abs/1511.06452 (2015), arXiv preprint arXiv:1511.06452; Liu, Z., Luo, P., Qiu, S., Wang, X., & Tang, X. (2016, June), DeepFashion: Powering robust clothes recognition and retrieval with rich annotations, In Proceedings of the IEEE Conference on Computer Vision and Pattern Recognition (CVPR)) or e.g. e-commerce product data images, etc.

The original training data may comprise metadata associated with the images, for example Data Labels and/or other Metadata Information (e.g. any available metadata information on the internet and/or label information).

The image-to-text model 31 generates image descriptions/captions of the images in the original training data. The image description generation may utilize contemporary Visual Image Captioning models (e.g. Li, J., Li, D., Savarese, S., & Hoi, S. (2023). Blip-2: Bootstrapping language-image pre-training with frozen image encoders and large language models. arXiv preprint arXiv:2301.12597) to produce textual explanations of the training images. The aim of the model 31 is to transform visual data into textual insights compatible with the later processing in the system 300. The image description generation may be considered image description extraction using the pretrained image-to-text model 31. This extraction may harness state-of-the-art large language models (LLMs) that approximately embody Sampling Theorem precepts, ensuring that the discrete textual representations maintain the visual domain's continuous semantic integrity. The operations of the image-to-text model 31 may be performed by the data insight generator 32.

Data Insight Generator 32

This module employs a Hybrid Approach that integrates heuristics and LLM operations with prompt engineering to analyze image data (converted to text data), while reducing token processing costs and addressing restricted context constraints of current LLMs.

The Data Insight Generator 32 generates:

- Contextual Analysis: leveraging generated image descriptions from image-to-text model and available metadata.
- Class Distribution Insights: to check the class-imbalance thus guiding synthetic data generation process accordingly.
- Domain Distribution Insights: to check missing or imbalanced domains by analyzing the generated image descriptions from image-to-text model.
- Additional Training Classes: leveraging prompt engineering with LLMs on available data class information.
- Data Overview Generation: compiles a detailed summary of the dataset, identifying domain and class imbalances, and guides the subsequent generation and augmentation of data (including for novel classes), thereby enhancing the training set for subsequent steps.

Figure 3 illustrates outputs of the data insight generator 32 as comprising 1. content overview, 2. domain imbalance, and 3. class imbalance. The domain and class imbalances may also include identification of "new" domains and/or classes.

In other words, the Data Insight Generator (DIG) 32 efficiently processes visual data (or text data, if the generation of the image descriptions is performed outside the DIG 32) by extracting concise, descriptive metadata in text format through a combination of heuristics and LLMs with prompt engineering. This module adeptly overcomes the contextual limitations often encountered with contemporary LLMs, transforming data image descriptions into a rich concise textual format for in-depth analysis, unveiling underlying semantic patterns for guiding the synthetic data generation process.

An algorithm (including some explanations beneath each step) performed by the DIG 32 in a running implementation is shown below.

Require: Image dataset D,Large Language Model (LLM).

Ensure: D_insight = {Data overview, S_overview, class distribution I_class, absent classes in training data N, domain-imbalance information I_domain }.

1: $\varepsilon \leftarrow f\_ID$ (D)

- Generate image descriptions using image-to-text model f_ID

2: $T \leftarrow$ Tokenize($\varepsilon$)

- Segment descriptions into word tokens

3: T_clean $\leftarrow$ Remove (T, StopWords)

- Purge non-contributory tokens (i.e. remove stopwords)

4: T_pos $\leftarrow$ AnnotatePOS (T_clean)

- Assign part-of-speech tags

5: F_n, F_v $\leftarrow$ FilterByPOS (T_pos, {Nouns, Verbs})

- Extracting nouns and verbs and performing frequency analysis

6: C ← FrequencyAnalysis (F_n, F_v)

- Categorize and identify prominent/prevalent terms

7: M ← Extract (D, Metadata)

- Gather contextual dataset metadata

8: R ← Enhance (M, LLM)

- Refine metadata context with LLM

9: I_domain ← Infer (C, R,LLM)

- Infer domain-specific insights using LLM

10: I_class ← AssessImbalance (M, LLM)

- Statistically evaluate class distribution

11: N ← FindMissingClasses (I_class, LLM)

- Identify novel classes using LLM

12: S_overview ← Synthesize (I_domain, I_class, N, LLM)

- Develop comprehensive data overview

13: D_insight ← Format (S_overview, I_domain, I_class, N, LLM)

- Format output for downstream use

At operation 1, the DIG 32 extracts descriptions of the training images using the text-to-image model 31 (which may be considered part of the DIG 32).

Subsequent stages include tokenization at operation 2, cleansing at operation 3, informative token extraction at 5 to extract nouns and verbs, and frequency analysis at 6 to pinpoint prevalent terms C.

At operation 7, metadata is extracted from the original training data including any metadata included therein (e.g. labels, and e,g. metadata from the internet). Metadata contextualization R at operation 8 is crafted through a pre-trained foundational LLM's reasoning on metadata M. Domain imbalance I_domain and class distribution I_class are deduced at operations 9 and 10 via LLM-prompted reasoning, tailored to the task context and objectives for both labeled and unlabeled scenarios. For example, at operation 9 the prominent domains are determined and the under- and un-represented domains are determined. The frequency analysis of operation 6 helps the LLM to determine what are the under- and un-represented domains. Novel class identification N at operation 11 identifies un-represented classes, i.e. novel classes, based on the class imbalance (may be referred to as class distribution) information and an LLM. Synthesis of a contextual overview S_overview at 12 employs LLM prompt engineering, integrating I_domain, I_class, and N to provide the APS 33 with actionable insights. The contextual overview S_overview may be referred to as a summary statement. D_insight is generated by combining and formatting for the APS 33 the contextual overview and I_domain, I_class, and N.

In summary, the DIG 32 systematically dissects image representations to yield a nuanced contextual analysis, extracting pivotal class and domain distribution insights to mitigate imbalances, thereby enabling synthetic data generation for model robustness enhancement. Operations performed by the DIG 32 are described more below with reference to method steps.

Some example outputs of the operations in the above algorithm performed by the DIG 32 are described below.

An example output of the operation 6 (identifying prevalent terms using frequency analysis), operating on a subset of the publicly available CUB-200-2011 dataset (Wah, C., Branson, S., Welinder, P., Perona, P., Belongie, S.: The caltech-ucsd birds-200-2011 dataset (2011*)) is:

```
{
'Bird': 5152,
'Sitting': 2600,
'Flying': 2122,
'Sky': 1300,
'Swimming': 766
}.
```

The above example output is the five most commonly appearing terms together with their frequency.

An example output of the operation 7 when label information is included in the original dataset, operating on a subset of the publicly available CUB-200-2011 dataset:

```
{
'Black footed Albatross/Black Footed Albatross 0046_18.jpg': 1,
'Laysan_Albatross/Laysan_Albatross_0055_570.jpg': 2,
}.
```

An example output R of the operation 8, operating on a subset of the publicly available CUB-200-2011 dataset:

"Dataset Name: Caltech-UCSD Birds-200-2011 (CUB-200-2011)

Primary Use: Intended for use in fine-grained visual categorization tasks, the dataset is particularly suited for research that involves differentiating between various bird species based on visual details.

Release Year: 2011

Species Count: Contains images from 200 bird species, primarily from North America. Total Images: 11,788 images, all of which are annotated.

Annotations Provided:

Each image includes a bounding box to indicate the location of the bird.

Key part locations are annotated to assist in recognizing bird features (e.g., beak, head, wings), with about 15 parts labeled per species.

There are 312 binary attribute labels per species that describe characteristics such as color, pattern, and other species-specific traits.

Images come with labels for species classification, which is the primary task for which the dataset was designed.

Image Characteristics: The images are in JPEG format, and the resolution varies across the dataset. The images are not standardized in size and depict birds in natural settings.

Dataset Split:

The training set includes 5,994 images.

The test set contains 5,794 images.

Creators: The dataset was developed through a collaborative effort between the California Institute of Technology and the University of California, San Diego."

An example output I_domain of the operation 9, operating on a subset of the publicly available CUB-200-2011 dataset and using a GPT-4 LLM (e.g. OpenAI, R.: Gpt-4 technical report. arxiv 2303.08774):

"ChatGPT Response: 'Based on the top stop words and their occurrences, here are five key domains and the number of images associated with them:

1. Bird: There are 4948 occurrences of the word 'bird'. This suggests that there are numerous images related to birds.

2. Nature: There are 2079 occurrences of the word 'branch', 1293 occurrences of the word 'tree', and 507 occurrences of the word 'rock'. This indicates a significant number of images related to nature.

3. Water: There are 1134 occurrences of the word 'water' ad 464 occurrences of the word 'swimming'. This suggests the presence of images related to water scenes, such as lakes, rivers, or swimming activities.

4. Wildlife: The word 'sitting' occurs 3029 times and 'standing' occurs 1094 times. Although these words are not specific to any type of animal, they indicate the presence of wildlife imagery.

5. Flying: The word 'flying' has 592 occurrences, which suggests the presence of images related to flying objects, such as birds, planes, or other flying creatures."

An example output I_class of the operation 10:

```
{
'Class 1': 60 Images,
'Class 2: 101 Images,
'Class 100': 3 Images
}.
```

An example of the objective input to an LLM in the operation 11 and corresponding output N, operating on a subset of the publicly available CUB-200-2011 dataset:

```
"response = client.chat.competions.create(
    message=[
            {
                "role": "system",
                "content": f"You are an advanced Language Model with a
                specification in ornithology, specifically in the augmentation of bird
                species. Your task is to generate exactly 5 unique, completely
                different new bird species compared to the input list of the bird
                species. These new species should be entirely distinct from the input
                species in terms of visual characteristics and features. They must not
                even closely resemble them, yet they must be well known ones to the
                existing text-to-image models. The output must only include the list of
                the names of species as [species 1, species 2, ...], without
                description or any supplementary text.",
            }.
            {"role": "user", "content": user_message_str},
    ],
    model="gtt4v",
    max_tokens=100
    )"
```

Response (output), i.e. N = [Flamingo, Peacock, Ostrich, Emperor Penguin, Snowy Owl].
An example of S_overview in the operation 12, operating on a subset of the publicly available CUB-200-2011 dataset:

```
"{
    "role": "assistant",
    "content": "The CUB-200-2011 dataset is a balanced and diverse collection of
    bird images, with even class distribution across 200 species and rich domain
    variation in natural environments. This setup provides a valuable benchmark for
    image retrieval systems, offering both a fair testbed due to the uniform number of
    images per species and a challenging one due to the variability in the
    background, lighting, and poses. The detailed annotations further enhance the
    dataset's utility for fine-grained feature extraction, essential for accurate retrieval
    tasks."
    }".
```

An example of D_insight in the operation 13, comprising the collection of the relevant information in a JSON file:

```
{
S_overview: ....,
I_domain: ...,
I_class: ...,
N: ...,
}.
Augmentation Protocol Selector (APS) 33
```

The APS 33 formulates enhancement goals that are used by an another LLM (prompt generator 34) to generate text prompts to create controlled synthetic data via text-to-image models. The APS 33 generates reference descriptions giving the downstream LLM class information needed for the enhanced text prompt creation. The APS 33 uses prompt engineering with an LLM, incorporating feedback from the Data Insight Generator 32 (and also feedback, described later). Initially, the APS 33 relies exclusively on the DIG's output to generate enhancement objectives for the prompt generation process.
In other words, the APS 33 is responsible for generating enhancement objectives and reference descriptions, which guide a downstream LLM (prompt generator 34) to produce text prompts for downstream diffusion models. APS 33 receives $D\_insight$ output from Data Insight Generator 32, filtering feedback $F\_feedback$, and training feedback $T\_feedback$. Though, $F\_feedback = \emptyset$, $T\_feedback = \emptyset$ at the start of the training (as there is no feedback available at this stage.

An algorithm (including some explanations beneath each step) performed by the APS 33 in a running implementation is shown below.

```
1: Input: D_insigh, F_feedback, T_feedback, LLM
2: Output: E_objective, R_description
3: E_objective ← 0
4: R_description ← 0
5: for every class in {input data classes + N} do
6: E_objective [class] ← GenerateAugmentationObjective (LLM, D_insight [class]) Initial class-wise enhanced
prompt-generation objective for downstream LLM
7: R_description [class] ← GenerateReferenceDescription (LLM, class) Generates input information for a downstream LLM that executes E_objective to generate text-prompts
8: end for
9: E_objective ← IntegrateFeedback (E_objective. F_feedback, T_feedback, LLM) Integrates feedback including
whether F_feedback and/or _feedback are provided
10: return E_objective, R_description
```

Function Descriptions

- GenerateReferenceDescription: Generates reference descriptions containing class information.
- GenerateAugmentationObjective: Generates the enhancement objectives for the downstream LLM based on the reference descriptions.
- IntegrateFeedback: Refines the enhancement objectives by incorporating feedback using an LLM. During the first pass, $T\_Feedback$ and $F\_Feedback$ are absent (i.e. zero) and the enhancement objective is generated purely based on the Data Insight Generator component's output.

The APS 33 is a strategic module that defines the augmentation objectives for a downstream LLM (prompt generator 34) responsible for generating text prompts for the synthetic data generation. Leveraging the analytical and reasoning capabilities of foundational LLMs, the APS 33 transforms the data insights, filtering, and training feedback into actionable augmentation plans to guide the synthetic data generation process.

As delineated in the algorithm shown above, the APS 33 commences by interpreting the distilled insights D_insight from the Data Insight Generator 32. The APS 33 then systematically constructs a set of augmentation objectives E_objective and reference descriptions R_description, which serve to instruct an another LLM responsible for generating text prompts for downstream synthetic image generation. These objectives are carefully tailored to address the identified class imbalances, domain gaps, and for supplementing training data with novel classes, ensuring that the resulting synthetic data precisely targets the areas within the training dataset that require enhancement.

After the class-wise iterative synthetic data objectives are used for text prompts generation process and synthetic image generation, the APS 33 incorporates feedback from the model's performance and the data filtering stages (described below) during the later training stages. This feedback is useful in refining the augmentation objectives, allowing the APS 33 to adapt the synthetic data generation strategy to the evolving needs of the model. Through its methodical and adaptive approach, the APS 33 plays a useful role in the RobustRetrieVAL framework, ensuring the synthetic data generation is both targeted and effective, leading to substantial improvements in the training and performance of the model under training.

An example of the E_objective output, in the running example operating on a subset of the publicly available CUB-200-2011 dataset:

"You are a highly specialized image caption augmentation engine, designed for optimizing input prompts in text-to-image models with a focus on avian subjects. Your assignment is to create 60 captions for each given bird class name based on the information in user's request. Each caption should be formulated exclusively around the specified bird class, without incorporating any other bird species. Craft your captions to depict varied yet plausible scenarios that would be valuable for generating a diverse range of images via data augmentation techniques. Note that each scenario must only feature a single, prominently visible bird belonging to the class name in focus. Your output should maintain high grammatical standards, be clear, and concise. Output your generated enhanced captions in a list format without numbering, bullet points, or any additional markers. For instance: [caption1, caption2, ...]".

An example of the R_description output, in the running example operating on a subset of the publicly available CUB-200-2011 dataset, this example being for the class "Bald Eagle":
"The bird species is Bald Eagle. This class has no image in our data hence the generated images should be represent diverse domain scenarios as per the characteristics of this bird."

Prompt Generator 34

This component uses an LLM to create text prompts for downstream text-to-image model 35 in the pipeline that fulfill the Enhancement Objective provided by APS 33. The text-prompts are generated incorporating class information from ReferenceDescriptions received from APS 33, while ensuring satisfying the EnhancementObjective.

The text-prompt generation may be referred to as Caption Generation. Given the set of enhancement objectives (or a single one) from the APS 33, an LLM as caption generation module (or prompt generator) 34 crafts a collection of text prompts T_prompts using the set of reference class descriptions. For each class $c \in C$, the module constructs prompts $t_c \in$ T_prompts that are aligned with the augmentation strategy, converting the abstract augmentation goals into concrete linguistic constructs for image generation.

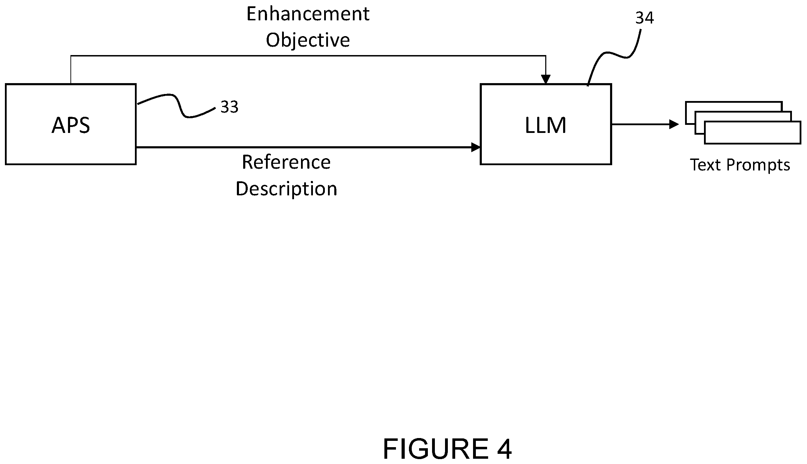

Figure 4 illustrates the function of the prompt generator 34 (labelled "LLM" here). The LLM 34 receives the enhancement objective(s) and reference description(s) from the APS 33 and based on these generates text prompts. The reference descriptions are provided per class. A plurality of text prompts are generated per class.

An example of the text prompts output from the prompt generator 34, in the running example operating on a subset of the publicly available CUB-200-2011 dataset, in line with the above example of the R_description and E_objective outputs:
"["A solitary Bald Eagle soaring high in the clear blue sky", "A mature Bald Eagle perched majestically on the topmost branch of a towering pine tree", "A Bald Eagle swooping down to catch a fish from the sparkling lake", "A Bald Eagle sitting on its large nest constructed of sticks, built on a cliff's edge", "A close-up of a Bald Eagle's profile, showcasing its sharp beak and intense gaze", "A Bald Eagle with its wings spread wide in the middle of flight", "A Bald Eagle set against a beautiful sunset, gliding gracefully across the horizon", "A juvenile Bald Eagle with mottled brown feathers standing on the ground", "A Bald Eagle trying to snatch its prey from the water in a dramatic display of hunting", "A Bald Eagle resting on a rugged tree stump amidst snowy terrain", "A Bald Eagle tearing a fish apart with its strong talons and beak", "A Bald Eagle in its habitat, set amidst the verdant landscape of a dense forest", "A Bald Eagle soaring protectively above its egg-filled nest", "A Bald Eagle screeching out a call from the high treetops", "A detailed close-up of a Bald Eagle's eye, reflecting the wild beauty of its forest environment", "A stunning image of a Bald Eagle in collective flight with other birds, yet maintaining its distinguishing look", "A Bald Eagle about to take off from its rocky seaside perch", "A full-bodied shot of a Bald Eagle perched on a dead tree branch, showcasing its white head and rich brown body", "A close-up of a Bald Eagle's head and powerful beak, demonstrating its fierce predatory characteristics", "A Bald Eagle landing onto the snowy ground with a meal in its grasp"]".

Synthetic Image Generation

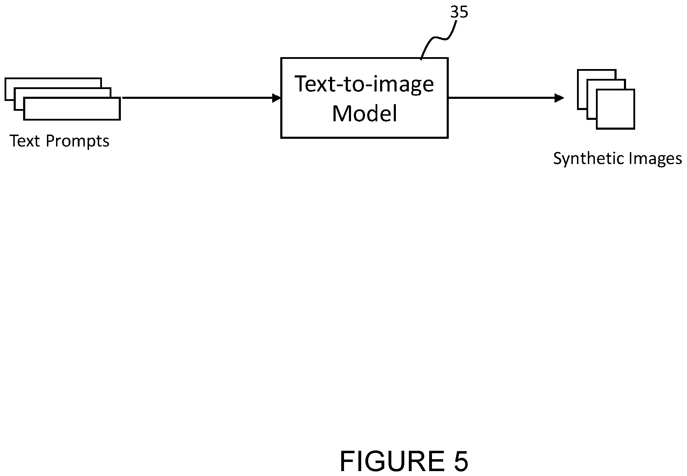

In this phase, the pre-trained text-to-image model 35 synthesizes images from the text prompts generated in the preceding stage. Figure 5 illustrates the operation of the text-to-image model 35. The text-to-image model 35 received the text prompts and outputs (synthetic) images generated based on the text prompts. The text-to-image model 35 may be any (pre-trained) text-to-image model. Possible text-to-image models that may be used include:

1. Stable Diffusion 2 (Rombach, R., Blattmann, A., Lorenz, D., Esser, P., & Ommer, B. (2022). High-resolution image synthesis with latent diffusion models. In Proceedings of the IEEE/CVF conference on computer vision and pattern recognition (pp. 10684-10695).), and
2. SDXL (Podell, D., English, Z., Lacey, K., Blattmann, A., Dockhorn, T., Müller, J., ... & Rombach, R. (2023). Sdxl: Improving latent diffusion models for high-resolution image synthesis. arXiv preprint arXiv:2307.01952.)

In other words, the Synthetic Data Generation may be considered executed in two sequential phases: caption generation and image synthesis. The image synthesis process is driven by the pre-trained text-to-image model 35, which maps 1-1 the generated text prompts T_prompts to a set of synthetic images I_synth. This mapping G: T_prompts $\rightarrow$ I_synth ensures that each synthetic image $i \in$ I_synth visually embodies its text prompt t, thereby systematically enriching the original dataset D with targeted synthetic instances through the objectives designed in the discrete text space. This structured process guarantees that the augmented dataset is precisely tailored to the identified needs, enhancing the breadth and depth of the data for training.

Outlier Removal and Diversity Control (ORDC) module 36

The ORDC module 36 provides integrated outlier detection and diversity control for synthetic data refinement. It concurrently address outlier and diversity challenges in synthetic data for image retrieval. The ORDC module 36 calculates centers for each original data training class and mean distances to the class centers within each original data training class. By comparing the distance to the corresponding class center from each synthetic image with a threshold based on the corresponding mean distance for that class, outliers can be excluded from the synthetic data. The diversity may be tuned using Diversity Factor ($\Delta$). The diversity factor provides tunable scaling to adaptively set outlier and diversity thresholds.

An algorithm (including some explanations beneath each step) performed by the ORDC module 36 in a running implementation is shown below.

Require: F: Pretrained deep metric learning model; $X_0$: Set of original training data; $X_s$: Set of synthetic data; $L_o$: Labels corresponding to $X_0$; $L_s$: Labels corresponding to $X_s$; $\Delta$: Diversity factor.

Ensure: Cleaned synthetic data set X_clean

1. $O \leftarrow F(X_0)$
Generate embeddings O for original training data
2: $S \leftarrow F(X_S)$
Generate embeddings S for synthetic data (the synthetically generated images)
3: Initialize C to an empty dictionary
class centers C
4: Initialize D to an empty dictionary
mean distances D
5: for each label I in $L_0$ do
6: $n_I \leftarrow$ number of samples with label I in $X_0$
7: $C[I] \leftarrow (1/n_I)^*\Sigma_{i:L0[i]=I} F(X_0[i])$
calculate class centers (average embedding per class) based on original training data
8: $D[I] \leftarrow (1/n_I)^*\Sigma_{i:L0[i]=I}$ dist $\{F(X_0[i]), C[I]\}$
calculate mean distances (average distance to class center per class) based on original training data
9: end for
10: Initialize X_clean to an empty set
11: for each synthetic sample $X_s[i]$ do
12: $I \leftarrow L_s[i]$
13: if dist $\{F(X_s[i]), C[I]\} \leq D[I] \times \Delta$ then
14: Add $X_s[i]$ to X_clean
15: end if
16: end for
17: return X_clean

The proposed ORDC module 36 is included to refine synthetic datasets by removing outliers and controlling the diversity of the generated data. This synthetic data filtering process is useful for curating the most beneficial subset of synthetic instances to augment the training set of the image processing model being trained. By drawing indirect inspiration from reduced-reference image quality assessment techniques, particularly robust feature matching, the ORDC methodology leverages pretrained deep metric learning models to extract embeddings that encapsulate content-based features independent of image alignment. That is, a deep metric learning model may be used to extract the embeddings O and S. A model used in the image processing ML model being ultimately trained may be used to extract these embeddings, or any other suitable embedding extraction model may be used.

For example, the Algorithmic Framework of the ORDC module 36 employs a pretrained deep metric learning model, F, to map original and synthetic data, $X_o$ and $X_s$ to feature-rich embedding spaces O and S, respectively, as delineated in the above example algorithm. The ORDC module 36 is thus able to harness embeddings from models pretrained specifically for metric learning tasks. These embeddings, O and S, enable a content-aware comparison that transcends pixel-level differences, focusing instead on the semantic similarity of the data.

The ORDC module 36 then calculates class centroids C[I] and average intra-class distances D[I] for each class label $I \in L_o$ (operations 7 and 8), and uses these to filter $X_s$ by retaining samples whose embedding distance to C[I] is within D[I] scaled by a diversity factor $\Delta$ (in operations 11-14). This ensures synthetic samples contribute positively to the ongoing image processing model's empirical risk minimization, enhancing dataset quality by balancing outlier exclusion with diversity control. By dynamically adjusting the diversity factor, the ORDC module 36 may accommodate varying levels of data complexity, rendering it effective across diverse application domains. The method's reliance on readily available pretrained models negates the need for additional computational overhead, enhancing its efficiency.

Hence, the ORDC module 36 operationalizes content-aware synthetic data curation through semantic feature space analysis, dynamically adjusting Δ to cater to data complexity variations, optimizing the synthetic-to-original data distribution fit without incurring extra significant computational costs.

The ORDC module 36 also performs a feedback process which may be referred to as a filtering feedback process, to provide filtering feedback to the APS 33. That is, after generating the cleaned synthetic data X_clean the ORDC module 36 validates the consistency of the cleaned synthetic data Xclean with the enhancement objective(s). Through the analysis of change in class distributions before ($X_s$) and after (X_clean) cleaning of the synthetic data (excluding predefined data dependent exception scenarios E_check), it certifies that X_clean adheres to the specified enhancement objective(s). Should disparities arise, a compensatory data generation signal F_feedback is issued to APS 36 to rectify the imbalances.

Filtering Feedback: Confirms data cleaned by ORDC module 36 meets overall EnhancementObjective.

- Imbalance Detection: Identifies any class or domain imbalance caused by ORDC cleaning.
- Exception List Check: Cross-references cleaned data with an exception list for compliance.
- APS Communication: Alerts APS 33 for imbalance mitigation.
- Compensatory Data Generation: Instructs APS 33 to produce additional data if imbalances are detected.

The Exception List Check step primarily defines stopping criteria for protecting APS from the infinite loop. For example, the following algorithm operations may be used:

```
[feedback_iteration = 1
 alert_list = []
 exempted_domain = [flying]
 if domain imbalance (number or fraction of images removed from a particular domain >
 predefined threshold-1) caused during filtering:
     Add domain imbalance (with domain info and imbalance amount) alert to
 alert list
 if class imbalance (number or fraction of images removed from a particular class >
 predefined threshold-2):
     Add class imbalance (with class info and imbalance amount) alert to alert_list
     ## Exception check examples
     for each alert in alert list:
     if imbalance_domain is in exempted_domain:
           remove the alert from the alert_list
 if alert_list is empty:
     send no alert to APS].
```

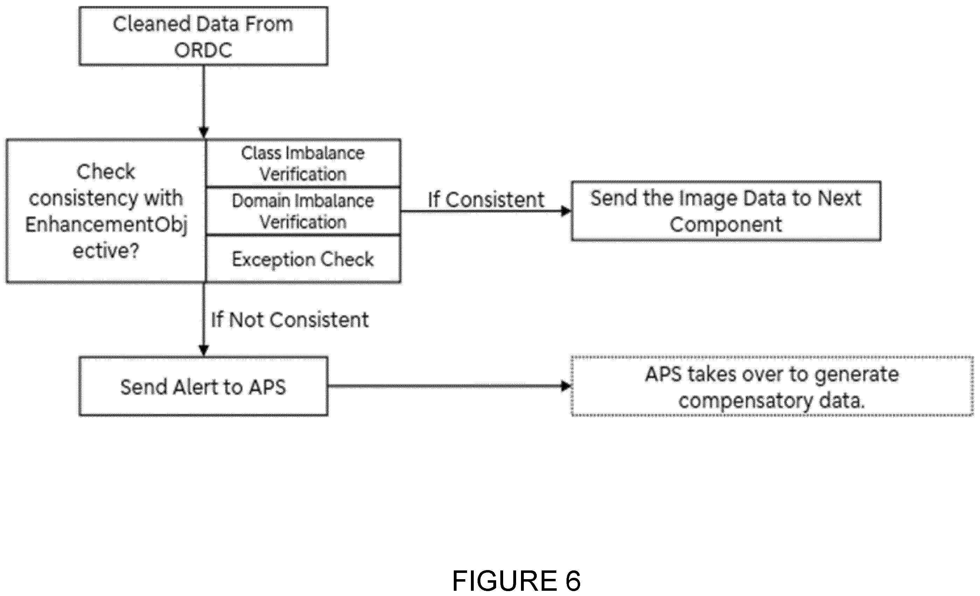

Figure 6 is a diagram illustrating the feedback process performed by the ORDC module 36, wherein checking consistency with the enhancement objective comprises checking whether a class imbalance has been addressed, whether a domain imbalance has been addressed, and/or whether any exceptions exist. The ORDC module does not check synthetic data in new classes (i.e. classes which are unrepresented in the original training data).

The ORDC module 36 may be considered to use simple heuristics to compare classes of synthetic images before and after cleaning. For example, the ORDC module 36 determines the number of synthetic images in a particular class and/or domain and compares this with the enhancement objective. For example, considering that an enhancement objective is to generate 50 images, but there are determined to be only 20 images in the relevant class after cleaning, then the ORDC module 36 signal to APS 33 will be to generate 30 images in the given class. It will be appreciated that this could result in an infinite (or just long) loop of processing, so if the same enhancement objective is defined for X times, the loop performed by the ORDC module 36 is stopped and the system proceeds to the next stage of processing.

Training Feedback Module 37

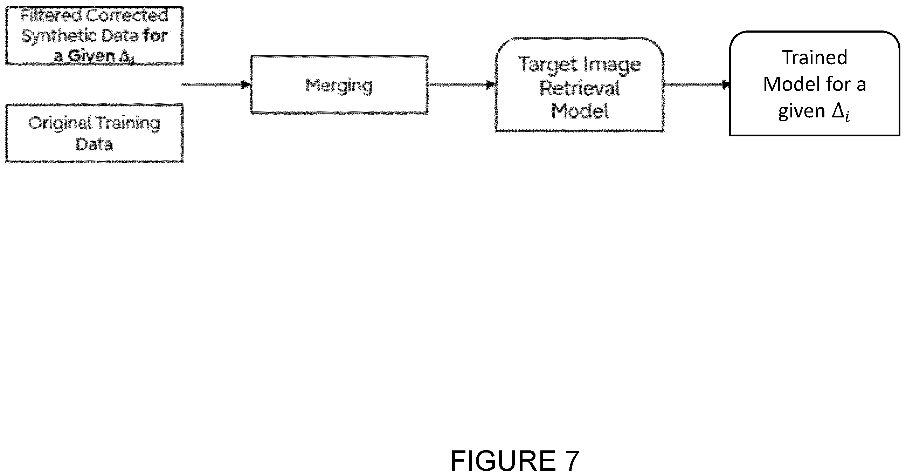

In this module, the filtered and corrected synthetic image data is augmented to the original training data and the image processing ML model is trained and evaluated. The image processing ML model is trained using data which includes synthetic data generated using different diversity factors, and the best-performing model is selected. Figure 7 is a diagram illustrating the training process including merging the original training data with the filtered and corrected synthetic data for a given diversity factor, training an image retrieval model (the target image processing ML model) and outputting a trained model for the given diversity factor.

Weak classes giving rise to the poorest performance of the best-performing ML model are identified and the APS 33 is signaled to cause more data to be generated in the identified weak classes.

Model performance may be evaluated using the Recall@1 metric (or Recall@k, or others). The Recall@1 metric may be understood in a simpler manner as a kind of accuracy (at high level understanding). In more detail, this metric may be understood as follows: a query image is input and is also included in a database of images, and the image retrieval model whose performance is being tests outputs an ordered list of similar images selected from the database. The Recall@1 metric checks whether the first image (most similar image) is the same as the query image or not. In general, the Recall@k metric checks whether the query image is included in the first k images of the ordered list. So for example, the Recall@10 metric checks whether the input image is included in the first 10 images of the ordered list. The Recall@1 metric is the most strict.

An algorithm (including some explanations beneath each step) performed by the training feedback module 37 in a running implementation is shown below.

Require: Set of trained models $M = \{M_1, M_2, .. , M_n\}$ for $\{\Delta_1, \Delta_2, ... \Delta_n\}$; Performance metric (Recall@1) function: Evaluate; Threshold T_perf for class performance; Number of classes to identify k

Ensure: Best performing model M*; Set of underperforming classes C_poor

```
1: M* ← arg max_{Mi∈M} Evaluate (M_i)
Identify best model
2: Initialize C_poor to an empty set
3: for i ← 1 to k do
4: c_poor arg min_{c∈C} Evaluate (M*, c)
5: if Evaluate (M*, c_poor) < T_perf then
6: Add c_poor to C_poor
7: end if
8: end for
9: Signal APS with C_poor for data generation
10: return M*, C_poor
```

The function of checking the cleaned data to provide the filtering feedback may be performed by a Dynamic Filtering module rather than by the ORDC module 36, or a Dynamic Filtering module may be considered included in the ORDC module 36.

The Dynamic Filtering and Training Feedback modules serve as pipeline sentinels. Filtering feedback (*F_feedback*) guarantees that synthetic data adheres to the initial augmentation objectives, whereas training feedback (*T_feedback*) identifies weaknesses in the training that necessitate further attention, thus prompting additional iterative refinements in subsequent generations.

The APS 33 updates enhancement objective(s) and reference description(s) for underperforming (weak) classes based on the training feedback. New synthetic data generated from these objectives is eventually merged with the existing original and synthetic training datasets in the pipeline.

The target image processing ML model (e.g. image retrieval model) is trained and/or fine-tuned using the original and synthetic training data generated within the pipeline. That is, in the concluding phase, the refined synthetic data X_clean and the additional refined data received in response to filtering and training feedback (X_ff and X_tf) is integrated with the original dataset as $\{X_0, X\_clean, X\_ff, X\_tf\}$ to increase the diversity of the original training data and rectify identified gaps. The enhanced dataset is then used to train and/or fine-tune the image retrieval model, improving its performance and generalization capabilities, especially in previously struggling areas.

The processes for providing filtering feedback and training feedback and generating additional synthetic data based thereon may be repeated, for example for a particular number of iterations or until no inconsistencies and/or weak classes are identified. With each iteration, the process for providing the filtering feedback is based only on the newly generated synthetic images (and not, for example, the previously generated and cleaned synthetic images as well).

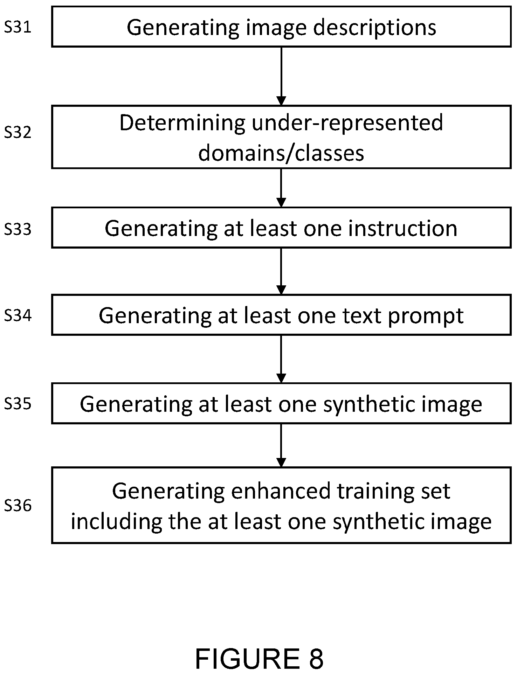

Figure 8 is a diagram illustrating a method according to an implementation of the present invention. The method comprises steps S31-S36. It will be appreciated that the method steps may be considered to correspond to processes and/or operations of the modules described with respect to Figure 3, and the description of the method may apply to the description of those modules and vice versa. The method in Figure 8 may be considered to correspond to the RobustRetrieVAL framework.

Step S31 comprises generating image descriptions. That is, step S31 comprises generating, using an image-to-text model, image descriptions of images in an original training set of images.

Step S32 comprises determining under- and/or un-represented domains/classes. That is, step S32 comprises determining, using at least one large language model, LLM, and based on the image descriptions, at least one domain and/or class which is unrepresented or under-represented in the original training set.

Step S33 comprises generating at least one instruction. That is, step S33 comprises generating, using a second LLM and based on the determination of the at least one domain and/or class (which is unrepresented or under-represented in the original training set), at least one instruction for a third LLM to generate at least one text prompt.

Step S34 comprises generating at least one text prompt. That is, step S34 comprises generating, using the third LLM and based on the at least one instruction, the at least one text prompt for a text-to-image model.

Step S35 comprises generating at least one synthetic image. That is, step S35 comprises generating, using the text-to-image model and based on the at least one text prompt, at least one synthetic image.

Step S36 comprises generating an enhanced training set including the at least one synthetic image. That is, step S36 comprises generating an enhanced training set of images for use in training an image processing machine learning, ML, model, the enhanced training set of images comprising the original training set of images and the at least one synthetic image.

Step S31 may be considered to correspond at least partially to the operations of the image-to-text model 31. Step S32 may be considered to correspond at least partially to the operations of the DIG 32. Step S33 may be considered to correspond at least partially to the operations of the APS 33. Step S34 may be considered to correspond at least partially to the operations of the prompt generator 34. Step S35 may be considered to correspond at least partially to the operations of the text-to-image model 35. At least some of the features described with respect to any of the modules in the system 300 may be considered included in the corresponding method steps.

Determining at least one domain which is unrepresented or under-represented in the original training set may comprise determining prevalent terms among the image descriptions, inferring, using a first LLM and based on the prevalent terms, domains represented in the original training set and a number of images in the original training set representing each domain, determining that a domain represented in the original training set is under-represented if the number or proportion of images in the original training set representing the domain is below a domain threshold, and determining, using a fourth LLM, if at least one domain exists which is not represented by any of the images in the original training set (and if it is determined that at least one domain exists which is not represented by any of the images in the original training set, determining the at least one domain as at least one unrepresented domain).

Determining at least one class which is unrepresented or under-represented in the original training set may comprise determining based on metadata and/or labels associated with the images a number of images in the original training set associated with/representing each class, determining that a class represented in the original training set is under-represented if the number or proportion of images in the original training set representing the class is below a class threshold, and determining, using a sixth LLM, if at least one class exists which is not represented by any of the images in the original training set (and if it is determined that at least one class exists which is not represented by any of the images in the original training set, determining the at least one class as at least one unrepresented class).

Determining prevalent terms among the image descriptions may comprise using natural language processing, NLP techniques, to determine the prevalent terms, for example, tokenizing the image descriptions, removing stop words from the tokenized image descriptions to provide cleaned image description tokens, assigning part-of-speech, POS, tags to the cleaned image description tokens, extracting nouns and verbs from the cleaned image description tokens based on the POS tags, and determining the n most frequently occurring nouns and verbs as the prevalent terms.

Each generated instruction names the class and/or domain which is under- or un-represented and may include a number of text prompts to be generated. An instruction may be generated in respect of each such class. In some implementations, the instruction comprises an enhancement objective and a reference description, for example as described above.

In some implementations the method further comprises performing a cleaning process which may be considered to correspond to some of the operations of the ORDC module 36. The cleaning process comprises cleaning the synthetic set by removing any synthetic image determined to be an outlier to generate a cleaned synthetic set of synthetic images.

Cleaning the synthetic set to generate the cleaned synthetic set comprises, for example, generating first embeddings of the images in the original training set, generating second embeddings of the synthetic images in the synthetic set which are associated with a class which is represented in the original training set, computing an average embedding for each class of images in the original training set (based on the labels/label information), for each class of images in the original training set, computing an average distance of distances of the first embeddings of the images of the class from the average embedding of the class, for each second embedding, comparing the distance between the second embedding and the average embedding for the corresponding class with a class outlier threshold which is based on the average distance for the corresponding class and, if the distance is greater than the class outlier threshold, removing the synthetic image corresponding to the second embedding from the synthetic set.

The class outlier threshold for a given class comprises the average distance for the class multiplied by a diversity factor. A metric learning model may be used and/or a model used in the image processing ML model being trained may be used, to generate the first and second embeddings. The embeddings are 1d vectors all having the same size as each other (e.g. 128 or 512 or 2048 etc.). The mean or average embedding of a plurality of the first embeddings is a vector of the same dimension but with elementwise simple arithmetic mean of those first embedding vectors. The distance may comprise any of a Euclidean distance, a dot product distance, and a cosine distance.

In some implementations the method comprises a checking process which may be considered to correspond to the operations of the ORDC module 36 for providing the filtering feedback. The checking process comprises checking the cleaned synthetic set to determine whether additional synthetic images are required and, if it is determined that additional synthetic images are required, performing a cleaning compensation process. The cleaning compensation process may be considered to correspond to the operations of the APS 33, prompt generator 34, and text-to-image model 35 in response to the filtering feedback. The cleaning compensation process comprises generating, using the second LLM, at least one further instruction for the third LLM to generate at least one text prompt, generating, using the third LLM and based on the at least one further instruction, the at least one text prompt for the text-to-image model, generating, using the text-to-image model and based on the at least one text prompt, at least one further synthetic image.

Checking the cleaned synthetic set to determine whether additional synthetic images are required comprises, in an implementation, comparing the number of synthetic images in the cleaned synthetic set relating to each class and/or relating to each domain with a number of text prompts specified in the instruction or reference description or enhancement objective corresponding to the class or domain concerned, and for each class and/or for each domain, if it is determined that the number of synthetic images is smaller than the number of text prompts concerned, determining that additional synthetic images are required.

Generating the at least one further instruction may comprise generating an enhancement objective comprising context for the third LLM to use in generating the at least one text prompt and generating at least one reference description, each reference description naming a class and/or a domain, for example a class which is determined to be under- or un-represented in the cleaned synthetic data.

As similarly indicated in the description with reference to Figure 3, the method comprises in some implementations successively iterating/repeating the cleaning, checking, and cleaning compensation processes until it is determined in the checking process that no additional synthetic images are required or until a checking threshold number of iterations has been performed, and wherein the enhanced training set comprises the original training set of images and the cleaned synthetic set of synthetic images generated at each iteration of the cleaning process.

In some implementations the method comprises a training feedback process which may be considered to correspond to the operations of the training feedback module 37. The training feedback process comprises evaluating performance of a trained image processing ML model to determine whether further additional synthetic images are required, and, if it is determined that further additional synthetic images are required, performing a weak class compensation process. The weak class compensation process may be considered to correspond to the operations of the APS 33, prompt generator 34, and text-to-image model 35 in response to the training feedback. The weak class compensation process comprises generating, using the second LLM, at least one further (additional) instruction for the third LLM to generate at least one text prompt, generating, using the third LLM and based on the at least one further (additional) instruction, the at least one text prompt for the text-to-image model, and generating, using the text-to-image model and based on the at least one text prompt, at least one further additional synthetic image.

The training feedback process comprises training the image processing ML model using the enhanced training set of images to generate the trained image processing ML model, and evaluating performance of the trained image processing ML model using (a plurality of classes of) test images and when the performance of the trained image processing ML model is below a performance threshold (e.g. T_perf) in respect of any class of the test images, determining that further additional synthetic images are required and determining the class as at least one weak class.

The training feedback process may further comprise generating a plurality of enhanced training sets corresponding respectively to a plurality of diversity factors, each enhanced training set comprising the original training set of images and a synthetic set of images generated using the corresponding diversity factor, And then the training feedback process will comprise training the image processing ML model separately using the plurality of enhanced training sets of images to generate a plurality of trained image processing ML models corresponding respectively to the plurality of enhanced training sets of images, evaluating performance of the plurality of trained image processing ML models and determining a best performing trained image processing ML model, and using the best performing trained image processing ML model and the corresponding enhanced training set of images in the determination of whether further additional synthetic images are required. For example, this is in line with the operations of the training feedback module 37.

The method may comprise successively iterating/repeating the training feedback process and the weak class compensation process until it is determined in the training feedback process that no further additional synthetic images are required or until a training threshold number of iterations has been performed. Then the enhanced training set will comprise the original training set of images and the further additional synthetic images generated at each iteration of the weak class compensation process (as well as any synthetic images generated in the cleaning compensation process and the first synthetically generated images, subject to the image removal performed in the cleaning process).

The Recall@k metric may be used to evaluate the performance of a model, for example as described above. It will be appreciated that there are a number of metrics which could be used.

The method may comprise training the image processing ML model using the enhanced training set of images. The method may further comprise using the image processing ML model after training for at least one image processing task. The image processing ML model may comprise an image retrieval model, for example using deep metric learning.

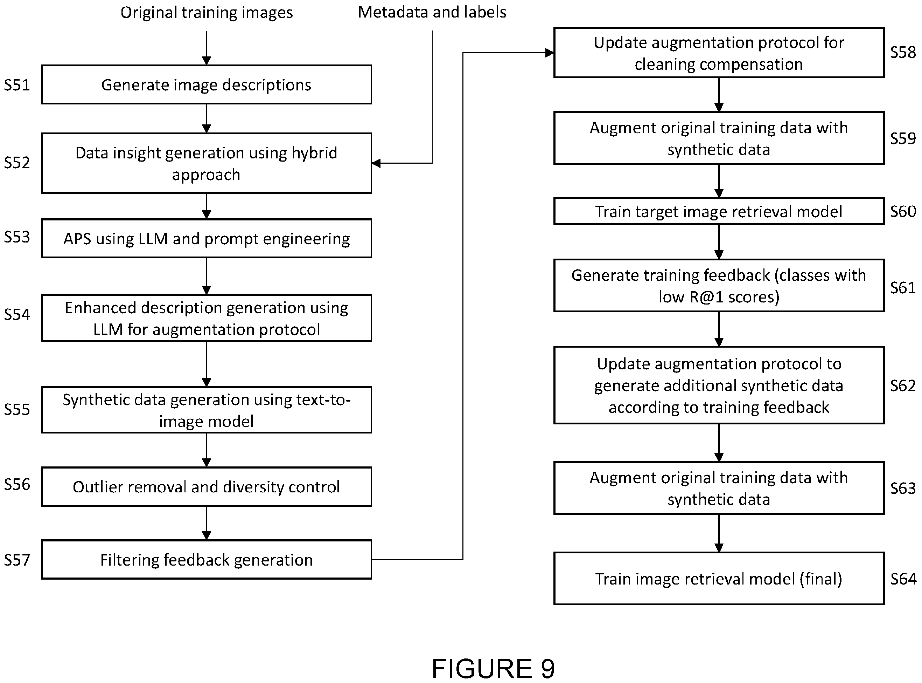

Figure 9 is a diagram illustrating a method according to an implementation of the present invention. The method comprises steps S51-S64. It will be appreciated that the method steps may be considered to correspond to processes and/or operations of the modules described with respect to Figure 3, and the description of the method may apply to the description of those modules and vice versa. The method in Figure 9 may be considered to correspond to the RobustRetrieVAL framework. Furthermore, description of steps in the Figure 8 method may apply to steps of the Figure 9 method and vice versa.

Step S51 comprises generating image descriptions. That is, step S51 comprises generating, using an image-to-text model, image descriptions of images in an original training set of images - referred to as "original training images" input to the step S51 in Figure 9.

Step S52 comprises data insight generation, for example that described with reference to the DIG 32. Step S53 comprises the operations of the APS 33 using an LLM and prompt engineering to output instructions. Step S54 comprises generating image descriptions using an LLM based on the instructions from step S53, e.g. as described with reference to the prompt generator 34. Step S55 comprises synthetic data generation using a text-to-image model, e.g. as described with reference to the text-to-image model 35. Step S56 comprises outlier removal and diversity control, e.g. as described with reference to the ORDC module 36. Step S57 comprises filtering feedback generation, e.g. as described with reference to the ORDC module 36. Step S58 comprises issuing new instruction(s) for image description generation in response to filtering feedback, that is, updating the augmentation protocol for cleaning compensation, e.g. as described with reference to the ODC module 36 and APS 33. Step S59 comprises augmenting original training data with synthetic data. This step may comprise the generation of further synthetic images based on the new instruction(s) and generating synthetic images based thereon, for cleaning compensation.

Step S60 comprises training a target image retrieval model (or image processing ML model) with the original + synthetic data. Step S61 comprises generating training feedback, including identifying classes of the data with low recall@1 scores. Steps S60 and S61 may comprise the operations of the training feedback module 37. Step S62 comprises generating new instruction(s) for image description generation in response to the training feedback, that is, updating the augmentation protocol according to training feedback, e.g. as described with reference to the APS 33.

Step S61 comprises augmenting the training data (comprising the original training data and the previous synthetic data) with the newly generated synthetic data. This step may comprise the generation of that new synthetic data by generating image descriptions based on the new instruction(s) and generating synthetic images based thereon. Step S64 comprises training the target image retrieval model (or image processing ML model) using the final enhanced training set of original and synthetic images.

It is noted that at least one instance of each of the checking, cleaning, and cleaning compensation processes may be performed after the generation of synthetic images in response to the training feedback process. It will be appreciated that the checking, cleaning, cleaning compensation, training feedback, and weak class compensation processes may be iterated until it is determined that no more synthetic images are required and/or until a threshold number of iterations of the training feedback and/or cleaning compensation processes have been reached.

In the above description of Figures 3-9, reference is made to LLMs. Each instance of an LLM may be different to all the others, or the same LLM may be used in some steps/modules. For example, an LLM may be trained in such a way that it can perform all the tasks mentioned above (akin to a GPT-4-like LLM), and in this case the same LLM may be used at every step/operation. The difference would lie in the prompt engineering, which is responsible for setting individual objectives for each task. There is also the possibility of assigning different specialized LLMs, each one specifically trained, for specific step(s)/operation(s) in the pipeline.

A first set of examples/tests in which the effectiveness of proposed implementations are evaluated are described below.

Zero-shot Learning Test

A proposed implementation in line with the RobustRetrieVAL framework was tested using zero-shot learning, i.e. the train and test classes are disjoint.

- Data: CUBirds-200-2011
- Training Data: $Dtrain = \{(x1, y1), (x2, y2), ... , (xn, yn)\}$, where $y \in Ctrain$, and Ctrain is the set of classes present in the training data.
- Testing Data: $Dtest = \{(x1', y1'), (x2', y2'), ... , (xm', ym')\}$, where $y' \in Ctest$, and Ctest is the set of classes present in the testing data
- Zero-Shot learning means train and test classes are disjoint meaning $y \cap y' = \emptyset$ in this case.
- Objective Function: Minimize the hyperbolic loss function L ($f(x)$ , $y$) over $Dtrain$, where $f(x)$ is a ViT (Vision Transformer) model. Specifically, DINO and ViT-S were used as the image processing ML models (image retrieval ML models) being trained.
- Evaluation Metric: Recall@K (Standard metric in image retrieval).
- Evaluation Setting: No-Shot/zero-shot, as $y \cap y' = \emptyset$.

DINO Reference: Caron, M., Touvron, H., Misra, I., Jégou, H., Mairal, J., Bojanowski, P., & Joulin, A. (2021). Emerging properties in self-supervised vision transformers. In Proceedings of the IEEE/CVF international conference on computer vision (pp. 9650-9660).

ViT-S Reference: Dosovitskiy, A., Beyer, L., Kolesnikov, A., Weissenborn, D., Zhai, X., Unterthiner, T., ... & Houlsby, N. (2020). An image is worth 16x16 words: Transformers for image recognition at scale. arXiv preprint arXiv:2010.11929.

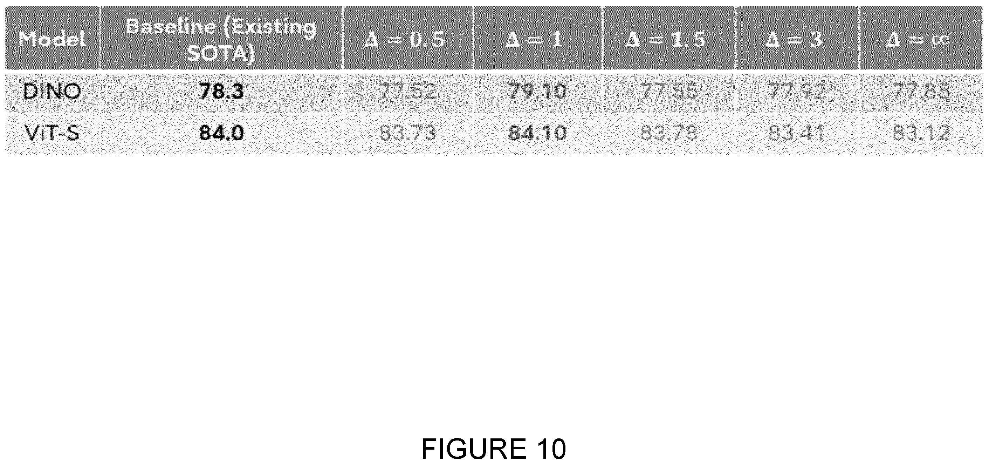

The results of the zero-shot learning testing are illustrated in Figure 10. DINO and ViT-S were trained using the RobustRetrieVAL framework at different diversity factors and compared with the baseline for those models. For the baseline, the models were trained using Hyperbolic Loss Function (Ermolov, A., Mirvakhabova, L., Khrulkov, V., Sebe, N., & Oseledets, I. (2022). Hyperbolic vision transformers: Combining improvements in metric learning. In Proceedings of the IEEE/CVF Conference on Computer Vision and Pattern Recognition (pp. 7409-7419)). The Recall@1 metric was used to evaluate the performance of the trained models and is shown in Figure 10. It is apparent that for diversity factor $\Delta = \mathbf{1}$, the RobustRetrieVAL framework outperforms current state of the art training for Hyperbolic ViT models.

Data-Scarce Zero-Shot Learning Test

A proposed implementation in line with the RobustRetrieVAL framework was tested using zero-shot learning (i.e. the train and test classes are disjoint) similarly to the above example/test but with less training data than the above test. Preparation of training data: *Dtrain'* with classes *Ctrain'* and *k* images in each class, sampled uniformly from the training data *Dtrain* in the above example/test such that:

- *Dtrain'* $\subset$ *Dtrain*

- *Ctrain'* = *Ctrain*

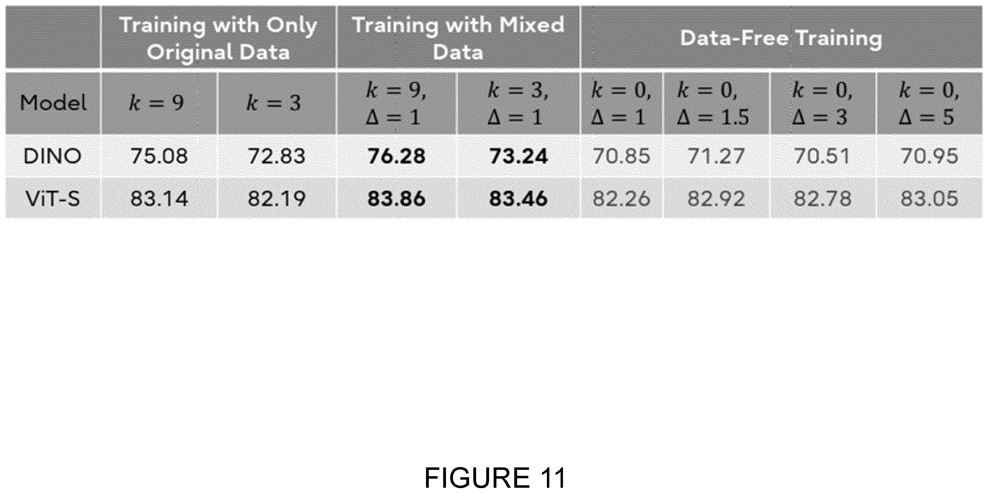

The test data, ViT models, and evaluation process are the same as in the above zero-shot learning example/test. The results are shown in Figure 11, in the first two sections titled "Training with Only Original Data" and "Training with Mixed Data". The values in the section "Training with Only Original Data" are the performance metrics for the models DINO and ViT-S trained in the conventional (state of the art) manner with k=3 and k=9 images per class in the training data, and the values in the section "Training with Mixed Data" are the performance metrics for the models DINO and ViT-S trained according to RobustRetrieVAL framework with k=3 and k=9 images per class in the training data and with $\Delta = \mathbf{1}$. It is apparent that the RobustRetrieVAL framework improves the performance of image retrieval algorithms under conditions of data scarcity in no-shot learning scenarios.

Training without Original Training Data Test

A proposed implementation in line with the RobustRetrieVAL framework was tested using data-free training. That is, exclusively synthetic data was used for training (and so k=0 using the notation for k=images per class from original training data in the example/test above). Such test may be representative of a trained image processing ML model's performance on real-world data in no-shot learning setting. Data-free training enables experimentation in settings where real-world data is limited, costly, or ethically challenging to acquire and paves the way for rapid prototyping and deployment, skipping over time consuming data collection phases. Furthermore, data security and privacy are inherently more manageable and data-free training allows for controlled experiments that can target specific phenomena or corner-cases.

The results of the training without original training data test are illustrated in Figure 11 in the section titled "Data-Free Training". The values in the section "Data-Free Training" are the performance metrics (same as above tests) for the models DINO and ViT-S trained according to RobustRetrieVAL framework with k=0 images per class in the training data (no original training data) and with $\Delta = \mathbf{1}$, 1.5, 3, and 5. It is apparent that the RobustRetrieVAL framework enables the training of zero-shot image retrieval models without necessitating access to the original training dataset.

Adversarial Robustness Assessment

The adversarial robustness of the DINO model trained using the RobustRetrieVAL framework was tested under the following conditions:

Architecture: DINO
Data: Synthetic data cleaned with $\Delta = 5$
Data Phase: Train

Attack method: Feature space PGD (projected gradient descent)
Attack objective: evasion
Evasion targets: 1

For completeness, the following information is noted:
'Data Phase': The entry for "data phase" indicates whether the data used for crafting adversarial attacks was a part of training of the DML model or was test data.

'Feature Space PGD (Projected Gradient Descent) Attack': This is an adversarial optimization with the adversarial loss operating at feature or embedding vectors of the deep metric learning model. That is, Feature space PGD means that the attack was optimized using adversarial loss at embeddings instead of labels in a conventional attack generation setting. References for further information on adversarial attack methodologies: PGD Attack: Madry, A., Makelov, A., Schmidt, L., Tsipras, D., & Vladu, A. (2017). Towards deep learning models resistant to adversarial attacks, arXiv preprint arXiv:1706.06083; Feature Space PGD attack: Rozsa, A., Günther, M., & Boult, T. E. (2017, October), LOTS about attacking deep features, In 2017 IEEE International Joint Conference on Biometrics (IJCB) (pp. 168-176), IEEE; Singh, I., Momiyama, S., Kakizaki, K., & Araki, T. (2021, September), On brightness agnostic adversarial examples against face recognition systems, In 2021 International Conference of the Biometrics Special Interest Group (BIOSIG) (pp. 1-5), IEEE.

'Evasion': An original image is perturbed through adversarial optimization in such a way that it is no longer being identified in its original category, "evading" detection of its actual class.

'Evasion Targets': Number of images with same identity as the image being used to craft adversarial attack.

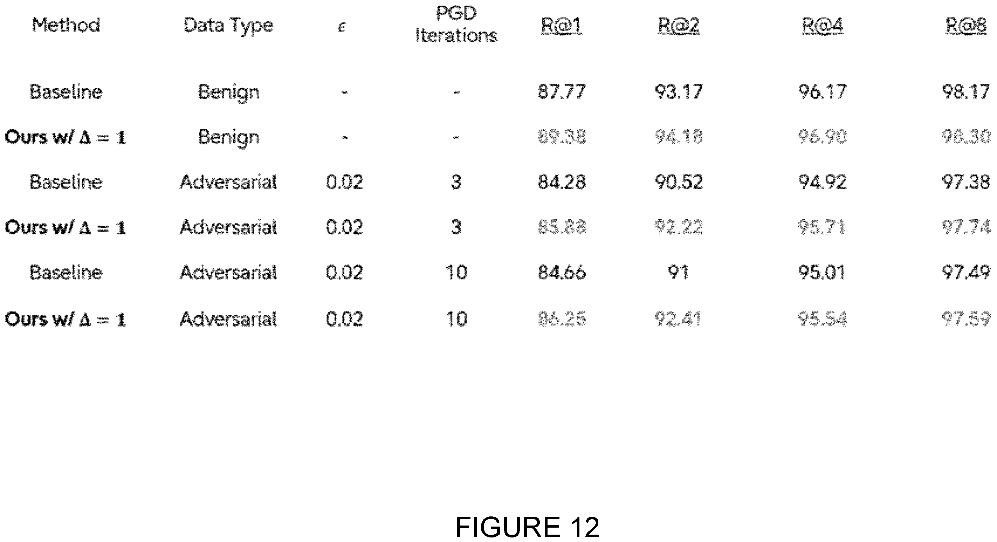

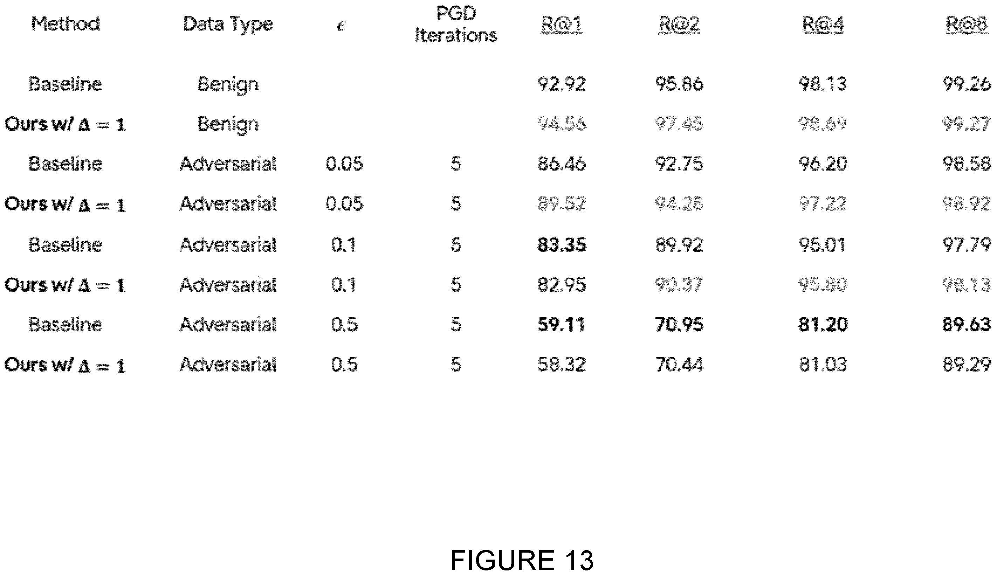

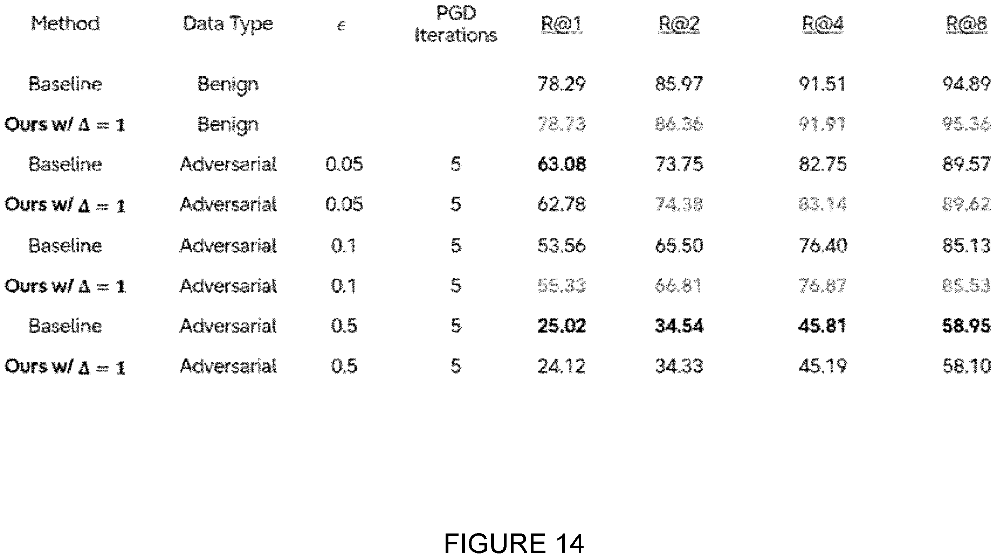

The results of the Adversarial Robustness Assessment under the above conditions are illustrated in Figure 12. Figure 13 illustrates the results of an Adversarial Robustness Assessment under the same conditions except for different values of $\varepsilon$. $\varepsilon$ is the L-infinity constraint on the size of adversarial noise; the smaller this value, the less visible the adversarial noise is to the naked eye - each $\varepsilon$ value in the table represents the fraction of the original image pixel range that has been adjusted. Figure 14 illustrates the results of an Adversarial Robustness Assessment under the same conditions as the Figure 13 results except that the data used is the CUB-200-2011 data (Wah, C., Branson, S., Welinder, P., Perona, P., & Belongie, S. (2011), The caltech-ucsd birds-200-2011 dataset) and the data phase is test phase rather than train phase.

The results of the Adversarial Robustness Assessments show that the RobustRetrieVAL framework enables higher robustness for the Vision Transformer models (DINO) in image retrieval tasks.

- For synthetic data, RobustRetrieVAL achieves relatively highest adversarial robustness.

- Adversarial robustness gains are particularly higher for highly imperceptible adversarial noises.

- Adversarial robustness gains start depleting with a considerable increase in attack strength and when adversarial noise starts becoming perceptible.

- For clean data as well, moderate robustness gains exist through RobustRetrieVAL.

- There is no robustness gain in the case of clean data for excessively high attack strengths.

Class-Imbalance Test

To evaluate practical scenarios with a limited number of training samples in a select set of classes, indicating an imbalance in the training data, subsets of the CUB dataset (Wah, C., Branson, S., Welinder, P., Perona, P., & Belongie, S. (2011). The caltech-ucsd birds-200-2011 dataset) were prepared. This involved restricting training images to two each in predefined sets of 75, 100, and 150 classes out of the total 200 classes. Experiments were conducted using the DINO and ViT-S16 Vision Transformer models in a Full-Shot setting. The test set was maintained constant, comprising images not included in the training set, to ensure a fair assessment.

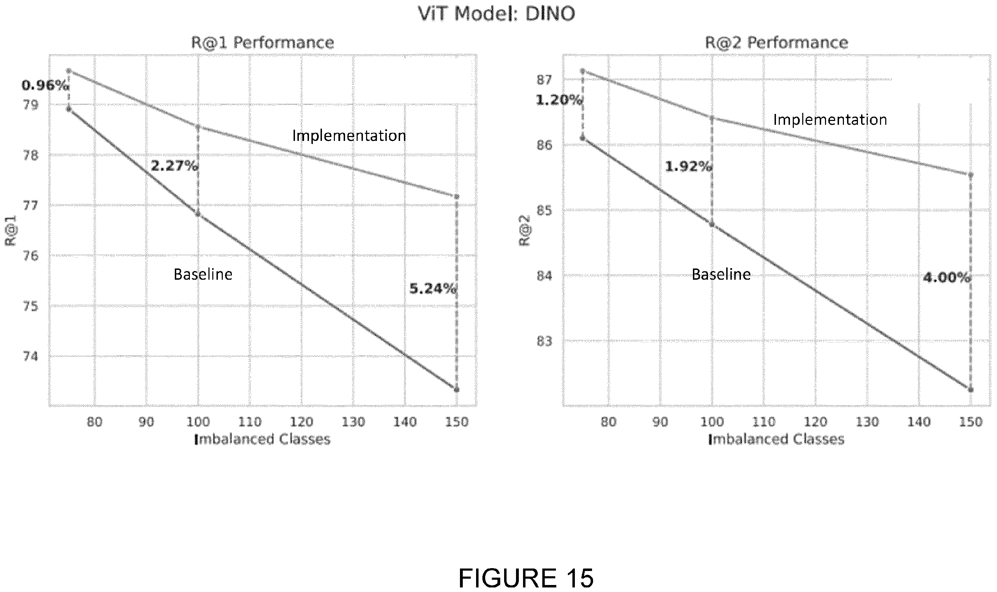

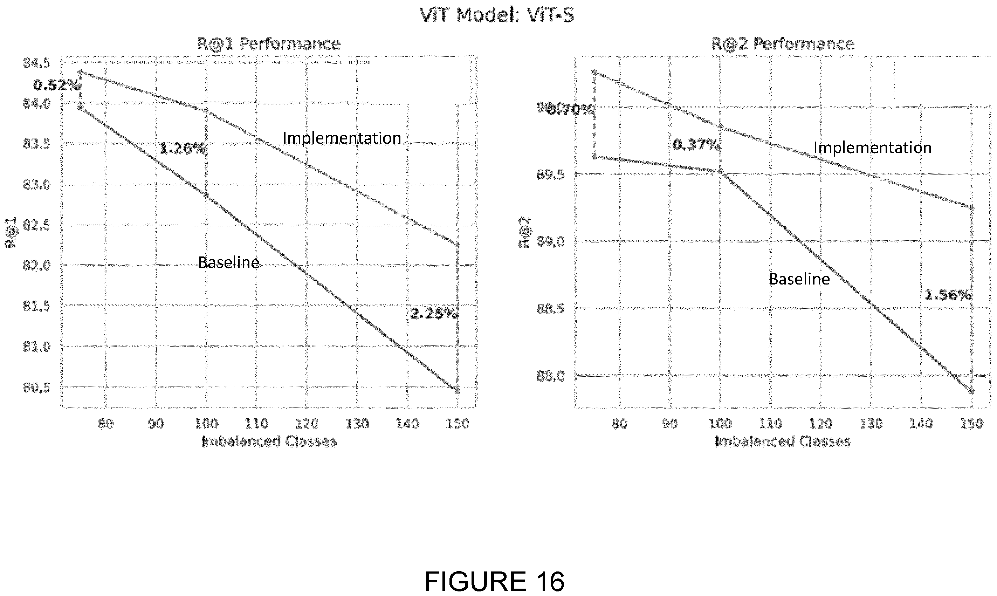

The results of the class-imbalance testing are illustrated in Figures 15 and 16, which include graphs showing the Recall@1 and Recall@2 metrics against the number of imbalanced classes in the training data. Figure 15 shows the results using DINO as the ViT model in the image retrieval and Figure 16 shows the results using ViT-S as the ViT model in the image retrieval. The "baseline" values were obtained using the image retrieval models trained in the conventional manner and the "implementation" values were obtained using the image retrieval models trained using the RobustRetrieVAL framework with Δ=1. In all cases it is apparent that the models trained using the RobustRetireVAL framework outperformed the models trained in the conventional manner.

Domain-Imbalance Test

To assess practical situations with restricted availability in certain domains during training, indicating domain imbalance, the entire CUB (Wah, C., Branson, S., Welinder, P., Perona, P., & Belongie, S. (2011). The caltech-ucsd birds-200-2011 dataset) training data was categorized into three domains: flying, sitting, and swimming, using the RobustRetrieVAL pipeline (i.e. the output of the DIG 32 processing), and training data from each of those domains (and not the other two) was used to train the vision transformer models (using the conventional method to obtain the baseline results and using RobustRetrieVAL for the "implementation" results).. The RobustRetrieVAL augmentation was carried out, targeting missing domains for each bird species. The experiments utilized the DINO and ViT-S16 Vision Transformer models in a full-shot setting. The test set remained constant, comprising images not included in the training set, to ensure a fair assessment.

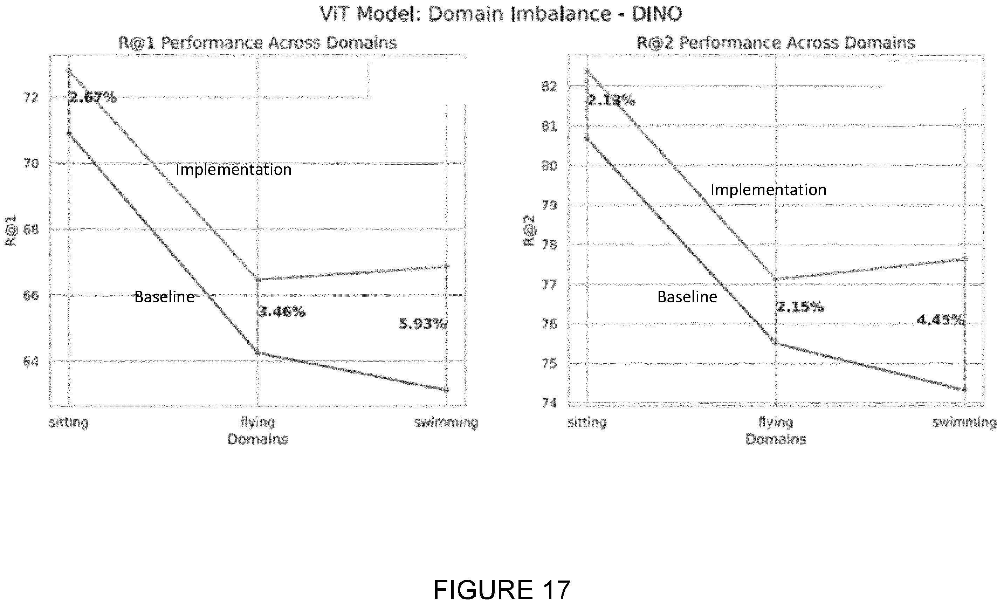

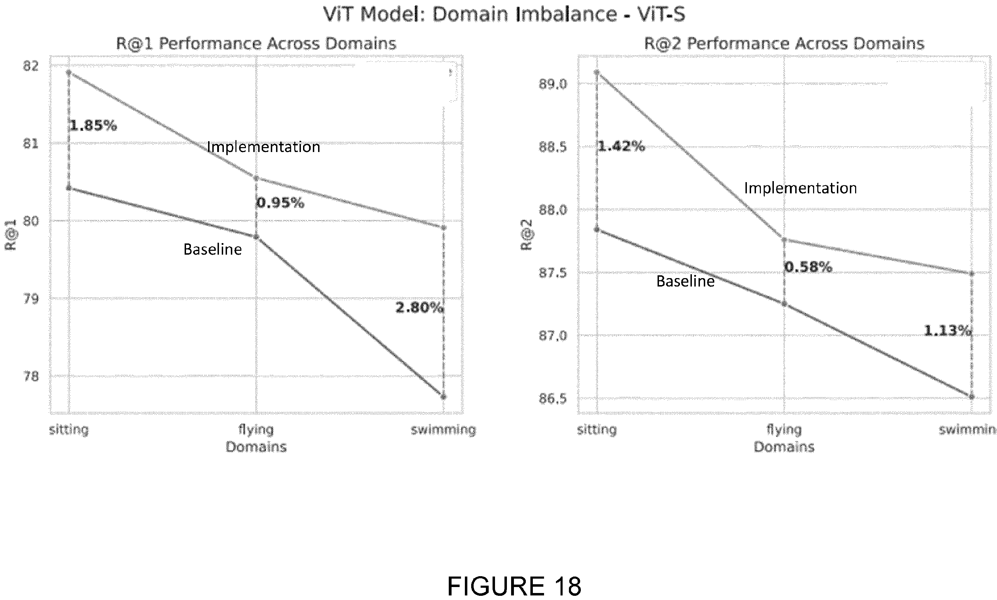

The results of the domain-imbalance testing are illustrated in Figures 17 and 18, which include graphs showing the Recall@1 and Recall@2 metrics for each domain. In the results, the x-axis represents discrete values corresponding to the domains identified in the original training set. For example, the domain indicated in the x axis was the only domain of training data from the original set of training data used for the models for that data point (meaning the other two domains were missing in that training subset). The RobustRetrieVAL identifies the missing domains and performs the targeted synthetic data augmentation focusing on the missing domains. Hence, a single x-axis point represents what single domain is present in the training data subset - the baseline models were trained on that data, and then RobustRetrieVAL performs synthetic data augmentation and retrains the same model to cause performance improvements.. Figure 17 shows the results using DINO as the ViT model in the image retrieval and Figure 18 shows the results using ViT-S as the ViT model in the image retrieval. The "baseline" values were obtained using the image retrieval models trained in the conventional manner and the "implementation" values were obtained using the image retrieval models trained using the RobustRetrieVAL framework with ∆=1. In all cases it is apparent that the models trained using the RobustRetireVAL framework outperformed the models trained in the conventional manner.

In light of the above experiments, the following is apparent.

- Performance Gains in Zero-Shot Deep Metric Learning: RobustRetrieVAL exhibited a performance enhancement of up to 1% over existing state of the art training for ViT models in traditional zero-shot deep metric learning scenarios.
- Advantages in Data-Scarce Environments: When confronted with limited original training data, RobustRetrieVAL demonstrated up to 2.3% performance gains compared to state of the art training for ViT models.
- Enhanced Adversarial Robustness: The model trained with RobustRetrieVAL techniques achieved a 1.9% increase in adversarial robustness. This indicates that image retrieval models utilizing RobustRetrieVAL in training are more resilient to adversarial attacks compared to those trained with conventional methods.
- Improvement with Imbalanced Input Data: In scenarios involving imbalanced input data, RobustRetrieVAL provided performance improvements of up to 5.24% demonstrating its capability to effectively handle datasets with uneven class distribution.
- Targeted Domain Augmentation for Incomplete Data: For input data characterized by incomplete or missing domains, RobustRetrieVAL's targeted domain augmentation yielded up to 5.93% performance improvements.

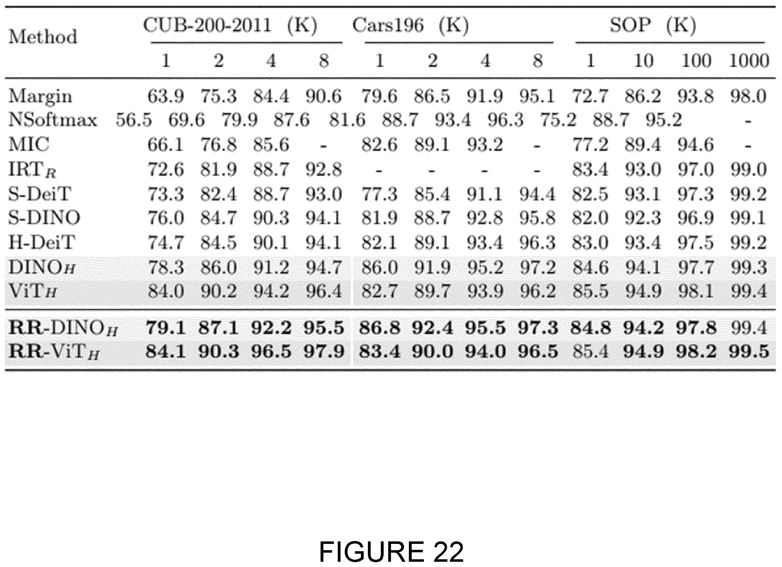

A second set of examples/tests in which the effectiveness of proposed implementations are evaluated are described below. This second set of examples/tests used an implementation of the RobustRetrieval framework with different parameters than in the first set of examples/tests, and in this second set the implementations are tested on more data. The Figure 10 results may be considered a subset of the Figure 22 results.

These experiments rigorously evaluate RobustRetrieVAL in data-scarce environments, focusing on domain and class content specific scarcities in the available data. Following this is validation of its generalization improvement capabilities on the standard balanced benchmarks as well. In all cases, RobustRetrieVAL demonstrates superior performance over SotA (state of the art) models.

Datasets and Evaluation Metric

Experiments were conducted on three image retrieval benchmark datasets: CUB-200-2011, Cars196 (Krause, J., et al.: 3d object representations for fine-grained categorization, In: Proceedings of the IEEE international conference on computer vision workshops, pp. 554-561 (2013)) and Stanford Online Products (SOP) (Oh Song et al.: Deep metric learning via lifted structured feature embedding, In: Proceedings of the IEEE conference on computer vision and pattern recognition. pp. 4004-4012 (2016)). R@K was adopted as the evaluation metric, a well-known choice for image retrieval performance assessment.

Baselines and Implementation

RobustRetrieVAL was compared with current SotA in CBIR (content-based image retrieval) at 224×224 input resolution, namely the hyperbolic vision transformers $DINO_H$ and $ViT_H$, to evaluate performance gains in data-scarce scenarios. Additionally, also considered is a comprehensive set of baselines including Margin (Wu, C.Y., et al.: Sampling matters in deep embedding learning, In: Proceedings of the IEEE international conference on computer vision. pp. 2840-2848 (2017)), NSoftmax (Zhai, A., Wu, H.Y.: Classification is a strong baseline for deep metric learning, arXiv preprint arXiv:1811.12649 (2018)), MIC (Roth, K. et al.: Mic: Mining interclass characteristics for im-proved metric learning, In: Proceedings of the IEEE/CVF International Conference on Computer Vision. pp. 8000-8009 (2019)), and IRTR (El-Nouby, A., et al.: Training vision transformers for image retrieval, arXiv preprint arXiv:2102.05644 (2021)) for standard benchmark comparisons. The hyperbolic vision transformers comprise a hyperbolic loss function to finetune the original ViT, DINO, and DeiT (Touvron, H., et al.: Training data-efficient image transformers & distillation through attention, In: International conference on machine learning. pp. 10347-10357. PMLR (2021)) models. The models in all experiments have ImageNet pretraining initialization and operates with embedding dimension of 128. For image-to text metadata conversion, employ BLIP-2 (Li, J., et al: Blip-2: Bootstrapping language-image pre-training with frozen image encoders and large language models, arXiv preprint arXiv:2301.12597 (2023)) was used, and SDXL (Podell, D., et al.: Sdxl: Improving latent diffusion models for high-resolution image synthesis, arXiv preprint arXiv:2307.01952 (2023)) was used to synthesize realistic images from textual descriptions. GPT-4 was used as the LLM reasoning engine. In the ORDC filtering, $\Delta \in \{0.9, 1, 1.2, 1.5, 3, 5, \infty\}$ was set as an hyperparameter for constraining training complexity.

Data Preparation

To evaluate RobustRetrieVAL in image retrieval, standard DML benchmarks were adapted: CUB-200-2011, Cars196, and SOP, which originally have relatively balanced class and domain distributions. To simulate data scarcity and distribution skewness, training subsets were engineered with selectively redacted certain patterns, while the original test sets were retained unaltered to ensure unbiased benchmarking. While the curation of training subsets with controlled class distributions C is methodically straightforward, owing to the benchmarks' prevalent use in standard supervised DML model learning, an established method or criteria for domain-specific skewness and pattern omission remains to be formalized. To curate training sets with domain control, the DIG was utilized to delineate key primary domains Dset within each dataset.

For the CUB-200-2011 dataset, domains were categorized based on avian behaviors such as 'Sitting' (As), 'Swimming' (Aa), and 'Flying' (Af). Following a similar approach for Cars196 data, domains were categorized based on vehicle body types: 'Sedan' (Bs), 'SUV-Crossover' (Bc), and 'Performance Sport or Convertible' (Bp). A domain imbalance creator function was defined, $R : \chi_{train} \times$ Dset $\to \chi_{train}$ [domain-specific] to partition the training data for causing domain imbalances. Then, training subsets $\chi_{train}$[d] = $R (\chi_{train}, d)$ for d $\in$ Dset were generated, maintaining the class structure but images from select domain, thus simulating domain imbalances.

Simultaneously, to introduce class imbalances, a skewness parameter was employed, $\kappa$ : Ctotal $\to$ N where Ctotal is the entire set of classes. For a subset of classes Crestricted $\subset$ Ctotal, a restriction on the number of samples was applied to $\lambda$, generating controlled variations in class representation:

$$\kappa (i) = \{ \lambda \text{ if } i \in Crestricted; \text{ and } N_i \text{ if } i \in Ctotal \setminus Crestricted \}.$$

Combining $\kappa$ and $\varepsilon$ enables the construction of training subsets that accurately reflect the idiosyncratic skewness typical in real-world datasets. The standard 50:50 training-testing split was conformed to in order to maintain evaluation consistency. In zero-shot learning settings, a class-wise split was implemented, ensuring distinct train and test class sets. For full-shot learning, a sample-wise split within each class was performed, maintaining a balanced class distribution across training and testing sets with nonoverlapping samples.

Adversarial Robustness Assessment Setting

To confirm RobustRetrieVAL's effectiveness in enhancing adversarial robustness and improving generalizability, white-box feature-space evasion attacks were generated using the projected gradient descent (PGD) method with varying attack strengths on both real and synthetic data. For different attack strengths, robustness was measured across different numbers of attack gradient steps (s $\in \{1, 10\}$) and magnitudes of the $\ell_\infty$ adversarial noise bound ($\varepsilon \in \{12.75/255, 25.5/255, 127.5/255\}$). In line with the concept of Robust Accuracy for assessing adversarial robustness, Robust R@K scores were computed to quantify the adversarial robustness. Evaluations were performed on zero-shot and full-shot retrieval tasks for the CUB-200-2011 and Cars196 datasets.

Results in Data-Scarce Settings

Domain Augmentation. Figure 19 is a table of results of applying DINO and ViT in data scarce settings in a full-shot setting in line with the above description, without and with RobustRetrieVAL to augment the data (denoted with "RR-"). That is, Figure 19 shows results for automated domain augmentation in RobustRetrieVAL. PD: domains present in the original training data, AD: a superset of augmented domains based on class-specific characteristics. Domains in Xcub data (activity-based): flying Af, sitting As, and aquatic Aa; Domains in Xcars data (vehicle body-based): sedan Bs, SUV-crossover Bc, performance sports, and convertibles Bp. $\Delta^*$ represents optimal diversity factor $\Delta$ used in ORDC filtering. In full-shot setting, RobustRetrieVAL exhibits significant image retrieval performance enhancements in multiple domain-scarce scenarios across datasets and ViT models. Detailed in Figure 19, RobustRetrieVAL surpasses baseline ViT models under all domain scarcity conditions. Specifically, R@1 scores increase up to 18.3% and 20.1% for the domain-specific Cars196 Bp category on $DINO_H$ and $ViT_H$ models, respectively. For the CUB-200-2011 As domain, the increments are 3.6% with $ViT_H$ and 2.6% with $DINO_H$. Hence, substantiating RobustRetrieVAL's efficacy in enriching representations within underrepresented domains.

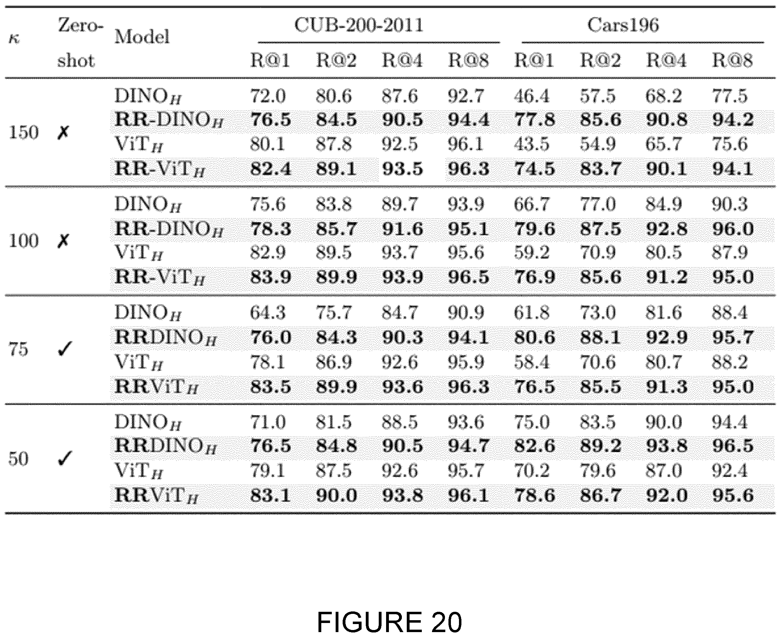

Class Imbalance Mitigation. In full-shot and zero-shot settings with varying degrees of class imbalance parameterized by $\kappa$, RobustRetrieVAL's performance was rigorously evaluated. Figure 20 is a table of results of applying DINO and ViT in class imbalance settings in full- and zerp-shot learning. That is, Figure 20 show results for automated class imbalance mitigation in zero-shot and full-shot learning tasks. Here, $\kappa$ denotes the number of training classes with $\lambda = 2$. The full-shot and zero-shot scenarios comprised 200 and 100 training classes for the CUB-200-2011 data, respectively, and 196 and 98 classes for the Cars196 data. The $\Delta$ of 1 for CUB-200-2011 data, and 1.5 for Cars196 was found optimal. Figure 20 details RobustRetrieVAL's consistent outperformance of the baseline Hyperbolic ViTs. Notably, RobustRetrieVAL achieves marked improvements in zero-shot scenarios with $\kappa = 75$, where training patterns are exceedingly scarce: R@1 scores increased by 11.7% over $DINO_H$, and by 5.4% over $ViT_H$ for the CUB-200-2011 dataset. For Cars196 data, the enhancements were 18.8% over $DINO_H$, and 18.1 % over $ViT_H$.

Adversarial Robustness Gains

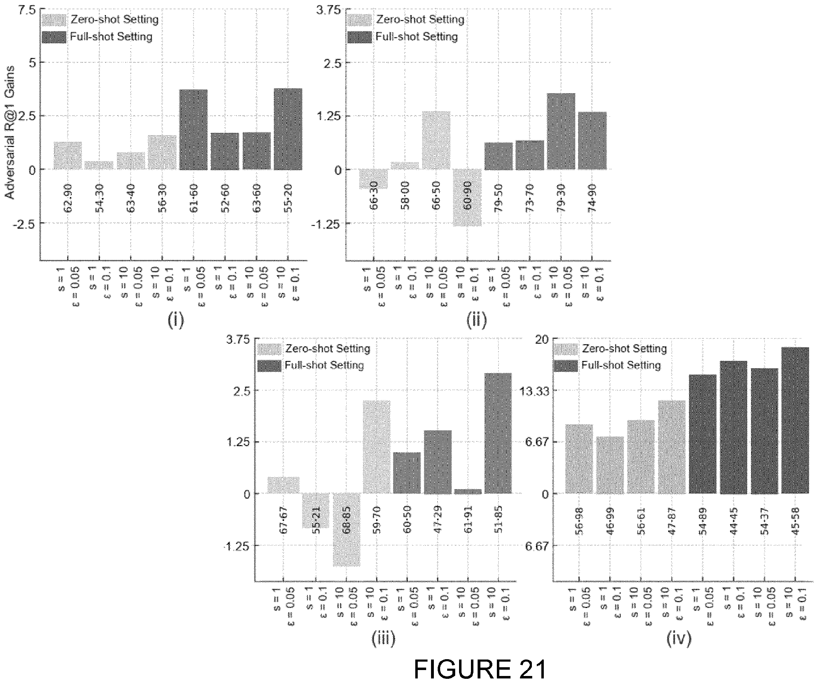

The adversarial robustness improvements by RobustRetrieVAL in the retrieval models were evaluated using customized experiments. Figure 21 presents the R@1 gains on white-box PGD attacks of varying strengths, devised with different $\ell_\infty$ noise bounds $\varepsilon$ and adversarial optimization gradient steps s. These attacks were crafted for causing evasion from the target models ($DINO_H$ and $RR-DINO_H$) in the embedding space. That is, the plots (i) and (ii) for CUB-200-2011, and (iii) and (iv) for Cars196 data, present the improvements in adversarial R@1 achieved by RobustRetrieVAL framework against white-box embedding-space PGD attacks of varying intensities. Robustness was measured across different numbers of attack gradient steps ($s \in 1, 10$) and the ($\ell_\infty$) adversarial noise size bound ($\varepsilon \in 0.05, 0.1, 0.5$), expressed as a fraction of the input image pixel value range. The figures (i) and (iii) use original test data, while (ii) and (iv) use synthetic data. Evaluations are performed in both zero-shot and full-shot learning settings for the original DINO and RR-DINO models. It is observed that models trained with RobustRetrieVAL were particularly robust against attacks with imperceptible noise levels ($\varepsilon \le 25.5/255$ ), resulting in up to an 18.85% increase in R@1 on the adversarial data. This confirms that RobustRetrieVAL does not induce overfitting to the test set but rather leads to less sensitive and more generalized retrieval models.

Results on Standard Benchmarks

Figure 22 is a table illustrating results comparing RobustRetrieVAL (RR)-trained models with standard performance benchmarks. RR-trained DINO and ViT ($RR-DINO_H$ and $RR-ViT_H$ Surpasses SotA Models in CUB-200-2011, Cars196, and SOP datasets, even with Reduced Data Augmentation in SOP due to Class Complexity and Computational Demands. This asserts RobustRetrieVAL's effectiveness in challenging data environments. Embedding size for all models was set to 128. Despite the fact that standard DML benchmark datasets typically feature balanced class and domain distributions, RobustRetrieVAL is specially designed to perform well in data-scarce scenarios. It still outperforms current SotA on the CUB-200-2011, Cars196, and SOP datasets (even with restricted augmentation), as illustrated in Figure 22. It is also observed that the initialization of ViT models-ViT-S for CUB-200-2011 and DINO for Cars196-significantly benefits from pretraining. Enhancing SotA without modifying model architectures or optimization strategies becomes a challenge when pretrained models possess inherent dataset-specific knowledge.

The above thorough evaluations substantiate RobustRetrieVAL's role in improving CBIR model generalizability, thus enhancing performance on both clean and adversarial samples. Its impact is particularly evident in limited data scenarios where RobustRetrieVAL's targeted augmentation alleviates available data deficits. RobustRetrieVAL's efficacy is also apparent in even balanced CBIR benchmarks.

The image processing ML model referred to in the above descriptions of Figures 3-9 may be used, after training, for tasks including image retrieval. Applications of image retrieval include, for example, retail product image search, hazard detection systems, face recognition, person re-identification, image search engines, and medical vision. The training methodologies disclosed herein may be particularly useful for training image retrieval models for use in data scarce scenarios such as:

- Retail Safety and Lost Item Retrieval: Customers or staff can use an image of a lost item, such as a purse or shopping bag, to search the store's surveillance system and determine where the item was last seen or located. That is, images similar to an image of the item/object can be retrieved from among frames of a video stream (from the surveillance system). This is of course not limited only to a retail//lost item setting and other applications are considered, e.g. security, locating a person, etc.
- Disaster Response Analysis: Identifying the extent of damage in post-disaster scenarios.
- Vehicle Search in Law Enforcement: If a specific vehicle is involved in a public safety incident, a trained image retrieval model can search through traffic camera feeds or public submissions to locate similar vehicles (similarly to the above retail/lost item scenario).

There is disclosed herein a computer-implemented framework/method to train image retrieval models by controlled augmentation of synthetic training data while automatically identifying missing training data and training weaknesses, the framework comprising:

- receiving a set of original training images and associated data labels and metadata;
- generating image descriptions for the original training images using visual question-answering and image captioning models;
- analyzing the generated image descriptions and available metadata if any, using a hybrid approach that integrates heuristics and a large language model (LLM) with prompt engineering to produce a data overview, class distribution insights, domain distribution insights, and identification of additional training classes;
- selecting augmentation protocols using an Augmentation Protocol Selector (APS) that formulates enhancement goals and generates reference descriptions for text prompt creation, wherein the APS incorporates feedback from a Data Insight Generator, Filtering Feedback, and Training Feedback;
- creating text prompts for a text-to-image model using a LLM based on the enhancement goals and reference descriptions from the APS;
- generating synthetic images from the text prompts using the text-to-image model;
- refining the synthetic images using an Outlier Removal and Diversity Control (ORDC) method that employs calculating class-specific centers in embedding space with mean cluster radius, and a tunable diversity factor;
- confirming that the refined synthetic images meet overall enhancement objectives and detecting any class or domain imbalances;
- augmenting the original training images with the filtered and corrected synthetic images;
- training a deep metric learning model (image retrieval model) using the augmented training data resulting in improved clean data image retrieval performance and adversarial robustness;
- generating training feedback by evaluating model performance and identifying underperforming classes; and
- updating enhancement objectives and reference descriptions for the underperforming classes based on the training feedback and generating new synthetic data to be merged with the training dataset for subsequent model training cycles.

In some implementations, the Data Insight Generator comprises:

a) An image description generation function that processes an image dataset to produce descriptive text using image-to-text or visual question-answering models;
b) A tokenization function that segments the generated image descriptions into word tokens using natural language processing techniques;
c) A stop word removal function that purges non-contributory tokens from the tokenized data to refine the dataset for further analysis;
d) A part-of-speech tagging function that annotates the cleaned tokens with grammatical information, facilitating the extraction of meaningful insights;
e) A frequency analysis function that identifies prominent nouns and verbs from the part-of-speech-tagged tokens, providing a basis for contextual and domain-specific insights;
f) A metadata extraction function that gathers contextual data from the dataset metadata, which can be further refined using large language models;
g) A domain-specific insight inference function that utilizes the frequency analysis results and refined metadata in conjunction with prompt engineering techniques to infer domain distribution insights;

h) A class distribution assessment function that statistically evaluates the balance of classes within the dataset, guiding the augmentation process;

i) A novel class identification function that uses large language models to detect additional training classes not represented in the current dataset;

j) A data overview synthesis function that combines domain insights, class distribution information, and novel class identifications to develop a comprehensive data overview;

k) A formatting function that prepares the synthesized data overview for downstream use, ensuring compatibility with the augmentation strategy and model training process.

In some implementations the APS comprises:

a) An input interface to receive data insights including a data overview, class distribution information, absent classes, domain-imbalance information from the Data Insight Generator in Claim 2, along with Filtering Feedback and Training Feedback;

b) An output interface to provide enhancement objectives and reference descriptions for text prompt generation;

c) A GenerateAugmentationObjective function that, for each class in the class distribution, utilizes a Large Language Model (LLM) to generate initial class-wise enhanced prompt generation objectives;

d) A GenerateReferenceDescription function that produces detailed reference descriptions for each class, supplying the necessary context for a downstream LLM to execute text prompt generation;

e) An IntegrateFeedback function that refines the enhancement objectives by integrating the initial objectives with feedback received from the Filtering Feedback and Training Feedback, using an LLM to adapt the augmentation strategy;

f) A feedback integration mechanism that, during initial training cycles, operates exclusively on the output from the Data Insight Generator to formulate enhancement objectives, and in subsequent cycles, dynamically incorporates feedback to update the objectives and reference descriptions.

In some implementations an LLM is configured to follow APS instructions and information, to generate text prompts that are specifically tailored to produce synthetic images that address identified class and domain imbalances in the training data, while also introducing newly identified additional training classes.

In some implementations the ORDC method comprises:

a) A pretrained deep metric learning model that maps original and synthetic data to a feature-rich embedding space, enabling content-aware comparison beyond pixel-level differences;

b) A class-specific center calculation mechanism that determines centroids for each class in the original training data to contextualize outlier detection;

c) A mean distance metric computation that assesses average embedding-space intraclass expansions (embedding-space class clusters' radii) within the original training data, serving as a basis for defining outlier and diversity criteria;

d) A diversity factor that introduces tunable scaling to adaptively set outlier and diversity thresholds, ensuring the retention of synthetic samples contributing positively to the model training;

e) An iterative process that dynamically adjusts the diversity factor to accommodate varying levels of data complexity and application domain diversity;

f) A synthetic data filtering algorithm that selectively includes synthetic samples in the cleaned dataset based on their distance to the class centroid, modulated by the diversity factor, while following (a)-(e).

In some implementations the Filtering Feedback component is configured to instruct the APS to produce additional synthetic data in response to detected imbalances caused by the ORDC cleaning process.

In some implementations the Filtering Feedback component utilizes an Imbalance Detection Algorithm to confirm compliance with the EnhancementObjective and instructs the APS for compensatory data generation when imbalances are detected.

In some implementations the Training Feedback Generation component is configured to use a Recall@K metric to evaluate the clean data performance and adversarial robustness assessment of the trained models and to signal the APS for additional data generation for classes with low Recall@K scores for the clean and adversarial inputs.

In some implementations the Training Feedback Generation component employs a Performance Evaluation Algorithm that assesses model performance metrics to identify the highestscoring model and signal the APS for targeted data generation for underperforming classes.

In some implementations the APS updates its augmentation strategy based on Training Feedback to generate new synthetic data, which is merged with the existing training dataset to address specific weaknesses identified in model performance.

There is disclosed herein a system for generating augmented training data for image retrieval, the system comprising a processing unit configured to execute instructions; a memory unit storing instructions for performing the method described above; and interfaces for receiving input data and providing output data, wherein the system is configured to implement the hybrid data insight generator approach, APS, LLM, text-to-image model, ORDC method, and Training Feedback Generation defined above.

There is disclosed herein a non-transitory computer-readable medium storing instructions that, when executed by a computer, cause the computer to perform the method described above.

In some implementations a pre-trained deep metric learning model is used to extract embeddings.

Methods and systems disclosed herein may ensure continuous adaptation and refinement, leading to a robust and accurate image retrieval model.

In general, problems associated with image retrieval models (and image processing models in general) include Low Accuracy and High Adversarial Susceptibility. These are caused (at least somewhat) by limited generalizability. Limited generalizability arises due to:

- The scarcity of diverse data (insufficient or missing training information).
- Poorly defined hypothesis space (bad model architecture).
- Poor training schema.

Methods and systems disclosed herein aim to resolve the problems of scarcity of diverse data (insufficient or missing training information) and poor training schema.

Methods and systems disclosed herein effectively leverage existing image-to-text, and text-to-image models with LLMs' capabilities to efficiently and automatically generate informative synthetic data for training.

Limitations of Existing Solutions for training image processing ML models include lack of ability to target specific areas in which data needs improvement and the requirement to fine-tune models to generate synthetic data.

Methods and systems disclosed herein achieve the following benefits among others:

- Enhanced Generalization in the trained image retrieval models resulting in improved clean data image retrieval performance and improved adversarial robustness against malicious attacks.
- Cohesive Workflow: A novel methodology resulting in a novel single framework that effectively unifies image-to-text, LLMs, and text-to-image models streamlines the data augmentation process.
- Automated Identification and Augmentation of Missing Training Information.

High Quality Synthetic Data generated in a Controlled Manner in the Methods and systems disclosed herein is useful to train highly accurate deep learning models even when the real data is not available. Automated Pipelining reduces manual effort required in synthetic data generation, preprocessing, and augmentation. Leveraging foundational generative models for training image processing ML models results in highly accurate and secure image processing ML models.

The RobustRetrieVAL methodology is predicated on the PAC (Probably approximately correct) Learning Framework, which evaluates learning algorithms based on their probability of selecting an almost accurate hypothesis from a large set of training examples. The RobustRetrieVAL methodology generates targeted synthetic data to effectively expand the training set, with the goal of improving the PAC generalization bounds and, consequently, the model's accuracy with new, unseen data. The RobustRetrieVAL methodology capitalizes on the expressiveness of DNNs, utilizing their ability to represent complex functions and decision boundaries critical for high-dimensional data in image retrieval tasks. Unlike conventional data augmentation methods that may inadvertently degrade performance due to naive content-untargeted augmentation and model capacity limits, RobustRetrieVAL makes sure to generate and augment the most effective synthetic data with fewer generations thus reducing training costs. The ORDC module functions, based on the optimization landscape theorems, ensure effective navigation of the optimization landscape by removing outliers and controlled introduction of training complexity through diversity. For completeness, it is noted that the optimization landscape theorems are general DNN loss landscape optimization theorems providing different error bounds and performance guarantees regarding the convergence of training towards global optima during training an objective function (objective function's surface, such as the shape and distribution of its local minima, saddle points, and other critical points, as well as the paths that connect these points in the high-dimensional space where neural network parameters reside).

As already shown above, empirical assessments of RobustRetrieVAL underscore its efficacy in enhancing DML model training, with observed performance increments reaching 5.93% in data-scarce domains and 5.24% in class-scarce training data scenarios. Additionally, the framework surpasses current State-of-the-art (SotA) vision transformer models, yielding a 1% improvement on standard balanced image retrieval benchmarks and a 2.3% improvement for balanced, data-scarce scenarios. RobustRetrieVAL also achieved 1.9% higher adversarial robustness, particularly against imperceptible adversarial attacks. These outcomes highlight RobustRetrieVAL's contribution to training more robust and generalizable models.

RobustRetrieVAL may be considered a unified framework that automatically identifies and augments context-dependent, potentially missing training information while tracking training weaknesses. This enables efficient generation and augmentation of relevant training data and patching of weak classes during training, resulting in improved performance on clean data and enhanced adversarial robustness of image retrieval models.

Methods and systems disclosed herein encompass/achieve the following, among others:

- Novel Integrated Multi-Modal Framework: A pioneering framework that integrates image-to-text, LLMs, and text-to-image models for controlled synthetic data augmentation.
- Multi-Fold Advancement: Introduces novel custom components: hybrid Data Insight Generator, dynamic Augmentation Protocol Selector, outlier removal and filtering, filtering feedback, training feedback, to enable controlled data augmentation.
- Data Quality and Model Integrity: Addresses critical issues in data quality and model integrity, by compensating with high quality synthetic data.
- Scalability and Adaptability: the proposed framework can be applied to handle diverse datasets, facilitating customization for specific AI applications.
- High Impact in Data Scarce Applications: For example, highlights the potential for interdisciplinary impact, particularly in fields where data scarcity or imbalance is a challenge.
- Contribution to AI Security: Contributes to the security and integrity of trained image retrieval models by improving their clean data performance and adversarial attack robustness.
- Research Implications: Sets a new benchmark for research in synthetic data augmentation, with implications for future studies in data imbalance, domain adaptation and continual learning.

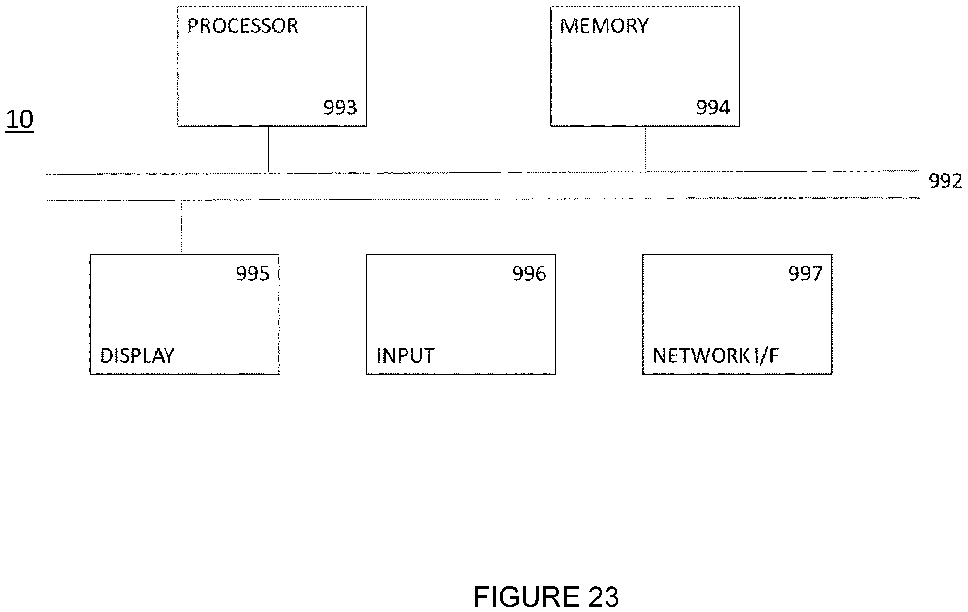

Figure 23 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S31-S36 and/or S51-S64 and/or any of the operations of modules disclosed herein, e.g. any of image-to-text model 31, DIG 32, APS 33, prompt generator 34, text-to-image model 35, ORDC module 36, and training feedback model 37, and/or the trained image processing ML model.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any of the method steps described above, e.g. any of steps S31-S36 and/or S51-S64 and/or any of the operations of modules disclosed herein, e.g. any of image-to-text model 31, DIG 32, APS 33, prompt generator 34, text-to-image model 35, ORDC module 36, and training feedback model 37, and/or the trained image processing ML model. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described above, e.g. any of steps S31-S36 and/or S51-S64 and/or any of the operations of modules disclosed herein, e.g. any of image-to-text model 31, DIG 32, APS 33, prompt generator 34, text-to-image model 35, ORDC module 36, and training feedback model 37, and/or the trained image processing ML model. The memory 994 stores data being read and written by the processor 993 and may store original training data and/or synthetic training data and/or metadata and/or label information and/or LLM information and/or weights for an image processing ML model and/or weights for any other ML model and/or text data and/or instructions for an LLM models and/or responses from LLM models and/or thresholds and/or performance metric values and/or test data and/or feedback information and/or algorithms and/or input data and/or other data, described above, and/or programs for executing any of the method steps or operations described above.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the steps and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as original training data and/or synthetic training data and/or metadata and/or label information and/or LLM information and/or weights for an image processing ML model and/or weights for any other ML model and/or text data and/or instructions for an LLM models and/or responses from LLM models and/or thresholds and/or performance metric values and/or test data and/or feedback information and/or algorithms and/or input data and/or other data and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 23. Such a computing device need not have every component illustrated in Figure 23, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machinereadable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps or module operations (e.g. any of steps S31-S36 and/or S51-S64 and/or any of the operations of modules disclosed herein, e.g. any of image-to-text model 31, DIG 32, APS 33, prompt generator 34, text-to-image model 35, ORDC module 36, and training feedback model 37, and/or the trained image processing ML model) of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1. A computer-implemented method comprising:

   generating, using an image-to-text model, image descriptions of images in an original training set of images;
   determining, using at least one large language model, LLM, and based on the image descriptions, at least one domain and/or class which is unrepresented or under-represented in the original training set;
   generating, using a second LLM and based on the determination of the at least one domain and/or class, at least one instruction for a third LLM to generate at least one text prompt;
   generating, using the third LLM and based on the at least one instruction, the at least one text prompt for a text-to-image model;
   generating, using the text-to-image model and based on the at least one text prompt, at least one synthetic image; and
   generating an enhanced training set of images for use in training an image processing machine learning, ML, model, the enhanced training set of images comprising the original training set of images and the at least one synthetic image.

2. The computer-implemented method as claimed in claim 1, wherein determining the at least one domain and/or class which is unrepresented or under-represented in the original training set comprises:

   determining prevalent terms among the image descriptions; and
   inferring, using a first LLM and based on the prevalent terms, domains represented in the original training set and a number of images in the original training set representing each domain;
   wherein determining the at least one domain and/or class which is unrepresented or under-represented further comprises:

   determining that a domain represented in the original training set is under-represented if the number or proportion of images in the original training set representing the domain is below a domain threshold; and/or
   determining, using a fourth LLM, if at least one domain exists which is not represented by any of the images in the original training set, and if it is determined that at least one domain exists which is not represented by any of the images in the original training set, determining the at least one domain as at least one unrepresented domain.

3. The computer-implemented method as claimed in claim 1 or claim 2, wherein determining the at least one domain and/or class which is unrepresented or under-represented in the original training set comprises determining, based on metadata and/or labels associated with the images, a number of images in the original training set associated with each class, wherein determining the at least one domain and/or class which is unrepresented or under-represented further comprises:

   determining that a class represented in the original training set is under-represented if the number or proportion of images in the original training set representing the class is below a class threshold; and/or
   determining, using a sixth LLM, if at least one class exists which is not represented by any of the images in the original training set, and if it is determined that at least one class exists which is not represented by any of the images in the original training set, determining the at least one class as at least one unrepresented class.

4. The computer-implemented method as claimed in any of the preceding claims, wherein generating the at least one instruction comprises:

   when an under-represented or unrepresented class has been determined, generating an instruction naming the under-represented or unrepresented class; and
   when an under-represented or unrepresented domain has been determined, generating an instruction naming the under-represented or unrepresented domain.

**5.** The computer-implemented method as claimed in any of the preceding claims, wherein generating the at least one synthetic image comprises generating a synthetic set comprising a plurality of synthetic images, wherein the computer-implemented method further comprises performing a cleaning process comprising cleaning the synthetic set by removing any synthetic image determined to be an outlier to generate a cleaned synthetic set of synthetic images, and wherein the enhanced training set comprises the original training set of images and the cleaned synthetic set of synthetic images.

**6.** The computer-implemented method as claimed in claim 5, wherein cleaning the synthetic set to generate the cleaned synthetic set comprises:

generating first embeddings of the images in the original training set;
generating second embeddings of the synthetic images in the synthetic set which are associated with a class which is represented in the original training set;
computing an average embedding for each class of images in the original training set;
for each class of images in the original training set, computing an average distance of distances of the first embeddings of the images of the class from the average embedding of the class; and
for each second embedding, comparing the distance between the second embedding and the average embedding for the corresponding class with a class outlier threshold which is based on the average distance for the corresponding class and, if the distance is greater than the class outlier threshold, removing the synthetic image corresponding to the second embedding from the synthetic set.

**7.** The computer-implemented method as claimed in claim 6, wherein the class outlier threshold for a given class comprises the average distance for the class multiplied by a diversity factor.

**8.** The computer-implemented method as claimed in any of claims 5 to 7, further comprising performing a checking process comprising checking the cleaned synthetic set to determine whether additional synthetic images are required and, if it is determined that additional synthetic images are required, performing a cleaning compensation process comprising:

generating, using the second LLM, at least one further instruction for the third LLM to generate at least one text prompt;
generating, using the third LLM and based on the at least one further instruction, the at least one text prompt for the text-to-image model; and
generating, using the text-to-image model and based on the at least one text prompt, at least one further synthetic image.

**9.** The computer-implemented method as claimed in any of the preceding claims, further comprising performing a training feedback process comprising evaluating performance of a trained image processing ML model to determine whether further additional synthetic images are required, and, if it is determined that further additional synthetic images are required, performing a weak class compensation process comprising:

generating, using the second LLM, at least one further instruction for the third LLM to generate at least one text prompt;
generating, using the third LLM and based on the at least one further instruction, the at least one text prompt for the text-to-image model; and
generating, using the text-to-image model and based on the at least one text prompt, at least one further additional synthetic image.

**10.** The computer-implemented method as claimed in claim 9, wherein the training feedback process comprises:

training the image processing ML model using the enhanced training set of images to generate the trained image processing ML model; and
evaluating performance of the trained image processing ML model using test images and when the performance of the trained image processing ML model is below a performance threshold in respect of any class of the test images, determining that further additional synthetic images are required and determining the class as at least one weak class.

**11.** The computer-implemented method as claimed in claim 10, comprising successively iterating the training feedback process and the weak class compensation process until it is determined in the training feedback process that no further additional synthetic images are required or until a training threshold number of iterations has been performed.

12. The computer-implemented method as claimed in any of the preceding claims, further comprising training the image processing ML model using the enhanced training set of images.

13. The computer-implemented method as claimed in any of the preceding claims, wherein the image processing ML model comprises an image retrieval model.

14. A computer program which, when run on a computer, causes the computer to carry out a method comprising: generating, using an image-to-text model, image descriptions of images in an original training set of images;

determining, using at least one large language model, LLM, and based on the image descriptions, at least one domain and/or class which is unrepresented or under-represented in the original training set; generating, using a second LLM and based on the determination of the at least one domain and/or class, at least one instruction for a third LLM to generate at least one text prompt; generating, using the third LLM and based on the at least one instruction, the at least one text prompt for a text-to-image model; generating, using the text-to-image model and based on the at least one text prompt, at least one synthetic image; and generating an enhanced training set of images for use in training an image processing machine learning, ML, model, the enhanced training set of images comprising the original training set of images and the at least one synthetic image.

15. An information processing apparatus comprising a memory and a processor connected to the memory, wherein the processor is configured to: generate, using an image-to-text model, image descriptions of images in an original training set of images;

determine, using at least one large language model, LLM, and based on the image descriptions, at least one domain and/or class which is unrepresented or under-represented in the original training set; generate, using a second LLM and based on the determination of the at least one domain and/or class, at least one instruction for a third LLM to generate at least one text prompt; generate, using the third LLM and based on the at least one instruction, the at least one text prompt for a text-to-image model; generate, using the text-to-image model and based on the at least one text prompt, at least one synthetic image; and generate an enhanced training set of images for use in training an image processing machine learning, ML, model, the enhanced training set of images comprising the original training set of images and the at least one synthetic image.

Image Indexation

Signatures

(S12) Calculate Metadata

(S14) Calculate Metadata

(S16) Comparator

IMAGE

Request

Similar Images

| IMAGE | IMAGE |
| IMAGE | IMAGE |

EP 4 632 602 A1

FIGURE 1

Discriminative Feature Embedding Space

Images → [ DNN ] → ( Class A · Class C · Class B · Class D )

FIGURE 2

EP 4 632 602 A1

FIGURE 3

FIGURE 4

Synthetic Images

35

Text-to-image Model

Text Prompts

FIGURE 5

```
┌─────────────────────┐
│  Cleaned Data From  │
│        ORDC         │
└─────────────────────┘
           │
           ▼
┌────────────────────┬──────────────────────┐
│                    │  Class Imbalance      │
│      Check         │    Verification       │
│  consistency with  ├──────────────────────┤        If Consistent      ┌──────────────────────────┐
│  EnhancementObj    │  Domain Imbalance    │ ────────────────────────► │ Send the Image Data to Next│
│      ective?       │    Verification       │                           │       Component          │
│                    ├──────────────────────┤                           └──────────────────────────┘
│                    │   Exception Check     │
└────────────────────┴──────────────────────┘
           │
           │ If Not Consistent
           ▼
┌─────────────────────┐                                        ┌──────────────────────────────┐
│  Send Alert to APS  │ ─────────────────────────────────────► │  APS takes over to generate  │
└─────────────────────┘                                        │      compensatory data.      │
                                                               └──────────────────────────────┘
```

FIGURE 6

Filtered Corrected Synthetic Data **for a Given** $\Delta_i$

Original Training Data

Merging

Target Image Retrieval Model

Trained Model for a given $\Delta_i$

FIGURE 7

EP 4 632 602 A1

| S31 | Generating image descriptions |
|-----|-------------------------------|

$\downarrow$

| S32 | Determining under-represented domains/classes |
|-----|----------------------------------------------|

$\downarrow$

| S33 | Generating at least one instruction |
|-----|-------------------------------------|

$\downarrow$

| S34 | Generating at least one text prompt |
|-----|-------------------------------------|

$\downarrow$

| S35 | Generating at least one synthetic image |
|-----|-----------------------------------------|

$\downarrow$

| S36 | Generating enhanced training set including the at least one synthetic image |
|-----|------------------------------------------------------------------------------|

FIGURE 8

Original training images　　　Metadata and labels

| S51 | Generate image descriptions |
| S52 | Data insight generation using hybrid approach |
| S53 | APS using LLM and prompt engineering |
| S54 | Enhanced description generation using LLM for augmentation protocol |
| S55 | Synthetic data generation using text-to-image model |
| S56 | Outlier removal and diversity control |
| S57 | Filtering feedback generation |

| Update augmentation protocol for cleaning compensation | S58 |
| Augment original training data with synthetic data | S59 |
| Train target image retrieval model | S60 |
| Generate training feedback (classes with low R@1 scores) | S61 |
| Update augmentation protocol to generate additional synthetic data according to training feedback | S62 |
| Augment original training data with synthetic data | S63 |
| Train image retrieval model (final) | S64 |

FIGURE 9

| Model | Baseline (Existing SOTA) | $\Delta = 0.5$ | $\Delta = 1$ | $\Delta = 1.5$ | $\Delta = 3$ | $\Delta = \infty$ |
|---|---|---|---|---|---|---|
| DINO | **78.3** | 77.52 | **79.10** | 77.55 | 77.92 | 77.85 |
| ViT-S | **84.0** | 83.73 | **84.10** | 83.78 | 83.41 | 83.12 |

FIGURE 10

| Model | Training with Only Original Data | | Training with Mixed Data | | Data-Free Training | | | |
|---|---|---|---|---|---|---|---|---|
| | $k = 9$ | $k = 3$ | $k = 9,$ $\Delta = 1$ | $k = 3,$ $\Delta = 1$ | $k = 0,$ $\Delta = 1$ | $k = 0,$ $\Delta = 1.5$ | $k = 0,$ $\Delta = 3$ | $k = 0,$ $\Delta = 5$ |
| DINO | 75.08 | 72.83 | **76.28** | **73.24** | 70.85 | 71.27 | 70.51 | 70.95 |
| ViT-S | 83.14 | 82.19 | **83.86** | **83.46** | 82.26 | 82.92 | 82.78 | 83.05 |

FIGURE 11

| Method | Data Type | $\epsilon$ | PGD Iterations | R@1 | R@2 | R@4 | R@8 |
|---|---|---|---|---|---|---|---|
| Baseline | Benign | - | - | 87.77 | 93.17 | 96.17 | 98.17 |
| Ours w/ $\Delta = 1$ | Benign | - | - | 89.38 | 94.18 | 96.90 | 98.30 |
| Baseline | Adversarial | 0.02 | 3 | 84.28 | 90.52 | 94.92 | 97.38 |
| Ours w/ $\Delta = 1$ | Adversarial | 0.02 | 3 | 85.88 | 92.22 | 95.71 | 97.74 |
| Baseline | Adversarial | 0.02 | 10 | 84.66 | 91 | 95.01 | 97.49 |
| Ours w/ $\Delta = 1$ | Adversarial | 0.02 | 10 | 86.25 | 92.41 | 95.54 | 97.59 |

EP 4 632 602 A1

FIGURE 12

| Method | Data Type | $\epsilon$ | PGD Iterations | R@1 | R@2 | R@4 | R@8 |
|---|---|---|---|---|---|---|---|
| Baseline | Benign | | | 92.92 | 95.86 | 98.13 | 99.26 |
| Ours w/ $\Delta = 1$ | Benign | | | 94.56 | 97.45 | 98.69 | 99.27 |
| Baseline | Adversarial | 0.05 | 5 | 86.46 | 92.75 | 96.20 | 98.58 |
| Ours w/ $\Delta = 1$ | Adversarial | 0.05 | 5 | 89.52 | 94.28 | 97.22 | 98.92 |
| Baseline | Adversarial | 0.1 | 5 | **83.35** | 89.92 | 95.01 | 97.79 |
| Ours w/ $\Delta = 1$ | Adversarial | 0.1 | 5 | 82.95 | 90.37 | 95.80 | 98.13 |
| Baseline | Adversarial | 0.5 | 5 | **59.11** | **70.95** | **81.20** | **89.63** |
| Ours w/ $\Delta = 1$ | Adversarial | 0.5 | 5 | 58.32 | 70.44 | 81.03 | 89.29 |

FIGURE 13

| Method | Data Type | $\epsilon$ | PGD Iterations | R@1 | R@2 | R@4 | R@8 |
|---|---|---|---|---|---|---|---|
| Baseline | Benign | | | 78.29 | 85.97 | 91.51 | 94.89 |
| **Ours w/ $\Delta = 1$** | Benign | | | 78.73 | 86.36 | 91.91 | 95.36 |
| Baseline | Adversarial | 0.05 | 5 | **63.08** | 73.75 | 82.75 | 89.57 |
| **Ours w/ $\Delta = 1$** | Adversarial | 0.05 | 5 | 62.78 | 74.38 | 83.14 | 89.62 |
| Baseline | Adversarial | 0.1 | 5 | 53.56 | 65.50 | 76.40 | 85.13 |
| **Ours w/ $\Delta = 1$** | Adversarial | 0.1 | 5 | 55.33 | 66.81 | 76.87 | 85.53 |
| Baseline | Adversarial | 0.5 | 5 | **25.02** | **34.54** | **45.81** | **58.95** |
| **Ours w/ $\Delta = 1$** | Adversarial | 0.5 | 5 | 24.12 | 34.33 | 45.19 | 58.10 |

FIGURE 14

EP 4 632 602 A1

ViT Model: DINO

FIGURE 15

EP 4 632 602 A1

FIGURE 16

ViT Model: Domain Imbalance - DINO

FIGURE 17

## ViT Model: Domain Imbalance - ViT-S

### R@1 Performance Across Domains

Implementation

Baseline

1.85%

0.95%

2.80%

### R@2 Performance Across Domains

Implementation

Baseline

1.42%

0.58%

1.13%

**FIGURE 18**

| Data | PD | DINO$_H$ | | | | AD | $\Delta^*$ | RR-DINO$_H$ | | | |
|---|---|---|---|---|---|---|---|---|---|---|---|
| | | R@1 | R@2 | R@4 | R@8 | | | R@1 | R@2 | R@4 | R@8 |
| $\mathcal{X}_{cub}$ | $A_f$ | 64.2 | 75.6 | 84.4 | 91.0 | $A_s, A_a$ | 1 | **68.4** | **78.4** | **86.3** | **91.9** |
| | $A_s$ | 69.2 | 78.1 | 85.5 | 90.6 | $A_a, A_f$ | 1 | **72.8** | **81.6** | **88.3** | **93.4** |
| | $A_a$ | 63.1 | 74.3 | 83.0 | 89.9 | $A_f, A_s$ | 1 | **66.9** | **77.6** | **85.8** | **91.8** |
| $\mathcal{X}_{cars}$ | $B_s$ | 70.3 | 79.2 | 86.8 | 91.7 | $B_c, B_p$ | 1.5 | **75.4** | **84.7** | **91.0** | **94.4** |
| | $B_c$ | 66.9 | 76.1 | 83.9 | 89.8 | $B_p, B_s$ | 1.5 | **75.8** | **84.2** | **90.4** | **94.5** |
| | $B_p$ | 56.9 | 68.6 | 78.2 | 85.6 | $B_s, B_c$ | 1.5 | **75.2** | **84.5** | **90.9** | **94.5** |
| | | ViT$_H$ | | | | | | RR-ViT$_H$ | | | |
| $\mathcal{X}_{cub}$ | $A_f$ | 78.3 | 87.0 | 92.4 | 96.0 | $A_s, A_a$ | 1 | **79.7** | **88.0** | **92.9** | **96.0** |
| | $A_s$ | 79.1 | 87.5 | 92.4 | 95.8 | $A_a, A_f$ | 1 | **81.7** | **88.4** | **93.1** | **96.1** |
| | $A_a$ | 77.7 | 86.5 | 92.2 | 95.8 | $A_f, A_s$ | 1 | **79.9** | **87.5** | **92.8** | **95.9** |
| $\mathcal{X}_{cars}$ | $B_s$ | 65.1 | 76.2 | 84.6 | 90.7 | $B_c, B_p$ | 1.5 | **72.8** | **82.5** | **89.7** | **94.1** |
| | $B_c$ | 62.7 | 73.3 | 81.7 | 87.9 | $B_p, B_s$ | 1.5 | **74.1** | **82.8** | **90.0** | **94.2** |
| | $B_p$ | 51.0 | 63.1 | 73.8 | 83.2 | $B_s, B_c$ | 1.5 | **71.1** | **81.6** | **89.2** | **94.0** |

FIGURE 19

| $\kappa$ | Zero-shot | Model | CUB-200-2011 | | | | Cars196 | | | |
|---|---|---|---|---|---|---|---|---|---|---|
| | | | R@1 | R@2 | R@4 | R@8 | R@1 | R@2 | R@4 | R@8 |
| 150 | ✗ | DINO$_H$ | 72.0 | 80.6 | 87.6 | 92.7 | 46.4 | 57.5 | 68.2 | 77.5 |
| | | **RR**-DINO$_H$ | **76.5** | **84.5** | **90.5** | **94.4** | **77.8** | **85.6** | **90.8** | **94.2** |
| | | ViT$_H$ | 80.1 | 87.8 | 92.5 | 96.1 | 43.5 | 54.9 | 65.7 | 75.6 |
| | | **RR**-ViT$_H$ | **82.4** | **89.1** | **93.5** | **96.3** | **74.5** | **83.7** | **90.1** | **94.1** |
| 100 | ✗ | DINO$_H$ | 75.6 | 83.8 | 89.7 | 93.9 | 66.7 | 77.0 | 84.9 | 90.3 |
| | | **RR**-DINO$_H$ | **78.3** | **85.7** | **91.6** | **95.1** | **79.6** | **87.5** | **92.8** | **96.0** |
| | | ViT$_H$ | 82.9 | 89.5 | 93.7 | 95.6 | 59.2 | 70.9 | 80.5 | 87.9 |
| | | **RR**-ViT$_H$ | **83.9** | **89.9** | **93.9** | **96.5** | **76.9** | **85.6** | **91.2** | **95.0** |
| 75 | ✓ | DINO$_H$ | 64.3 | 75.7 | 84.7 | 90.9 | 61.8 | 73.0 | 81.6 | 88.4 |
| | | **RR**DINO$_H$ | **76.0** | **84.3** | **90.3** | **94.1** | **80.6** | **88.1** | **92.9** | **95.7** |
| | | ViT$_H$ | 78.1 | 86.9 | 92.6 | 95.9 | 58.4 | 70.6 | 80.7 | 88.2 |
| | | **RR**ViT$_H$ | **83.5** | **89.9** | **93.6** | **96.3** | **76.5** | **85.5** | **91.3** | **95.0** |
| 50 | ✓ | DINO$_H$ | 71.0 | 81.5 | 88.5 | 93.6 | 75.0 | 83.5 | 90.0 | 94.4 |
| | | **RR**DINO$_H$ | **76.5** | **84.8** | **90.5** | **94.7** | **82.6** | **89.2** | **93.8** | **96.5** |
| | | ViT$_H$ | 79.1 | 87.5 | 92.6 | 95.7 | 70.2 | 79.6 | 87.0 | 92.4 |
| | | **RR**ViT$_H$ | **83.1** | **90.0** | **93.8** | **96.1** | **78.6** | **86.7** | **92.0** | **95.6** |

FIGURE 20

FIGURE 21

| Method | CUB-200-2011 (K) | | | | Cars196 (K) | | | | SOP (K) | | | |
|---|---|---|---|---|---|---|---|---|---|---|---|---|
| | 1 | 2 | 4 | 8 | 1 | 2 | 4 | 8 | 1 | 10 | 100 | 1000 |
| Margin | 63.9 | 75.3 | 84.4 | 90.6 | 79.6 | 86.5 | 91.9 | 95.1 | 72.7 | 86.2 | 93.8 | 98.0 |
| NSoftmax | 56.5 | 69.6 | 79.9 | 87.6 | 81.6 | 88.7 | 93.4 | 96.3 | 75.2 | 88.7 | 95.2 | - |
| MIC | 66.1 | 76.8 | 85.6 | - | 82.6 | 89.1 | 93.2 | - | 77.2 | 89.4 | 94.6 | - |
| $IRT_R$ | 72.6 | 81.9 | 88.7 | 92.8 | - | - | - | - | 83.4 | 93.0 | 97.0 | 99.0 |
| S-DeiT | 73.3 | 82.4 | 88.7 | 93.0 | 77.3 | 85.4 | 91.1 | 94.4 | 82.5 | 93.1 | 97.3 | 99.2 |
| S-DINO | 76.0 | 84.7 | 90.3 | 94.1 | 81.9 | 88.7 | 92.8 | 95.8 | 82.0 | 92.3 | 96.9 | 99.1 |
| H-DeiT | 74.7 | 84.5 | 90.1 | 94.1 | 82.1 | 89.1 | 93.4 | 96.3 | 83.0 | 93.4 | 97.5 | 99.2 |
| $DINO_H$ | 78.3 | 86.0 | 91.2 | 94.7 | 86.0 | 91.9 | 95.2 | 97.2 | 84.6 | 94.1 | 97.7 | 99.3 |
| $ViT_H$ | 84.0 | 90.2 | 94.2 | 96.4 | 82.7 | 89.7 | 93.9 | 96.2 | 85.5 | 94.9 | 98.1 | 99.4 |
| **RR-$DINO_H$** | **79.1** | **87.1** | **92.2** | **95.5** | **86.8** | **92.4** | **95.5** | **97.3** | **84.8** | **94.2** | **97.8** | 99.4 |
| **RR-$ViT_H$** | **84.1** | **90.3** | **96.5** | **97.9** | **83.4** | **90.0** | **94.0** | **96.5** | 85.4 | **94.9** | **98.2** | **99.5** |

FIGURE 22

EP 4 632 602 A1

10

```
┌─────────────────┐              ┌─────────────────┐
│ PROCESSOR       │              │ MEMORY          │
│                 │              │                 │
│            993  │              │            994  │
└─────────────────┘              └─────────────────┘
        │                                │
────────┴────────────────────────────────┴──────────── 992
    │                    │                    │
┌─────────────┐    ┌─────────────┐    ┌─────────────┐
│        995  │    │        996  │    │        997  │
│             │    │             │    │             │
│ DISPLAY     │    │ INPUT       │    │ NETWORK I/F │
└─────────────┘    └─────────────┘    └─────────────┘
```

FIGURE 23

Europäisches
Patentamt

European
Patent Office

Office européen
des brevets

# EUROPEAN SEARCH REPORT

**Application Number**

EP 24 21 6106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Li Junnan ET AL: "BLIP-2: Bootstrapping Language-Image Pre-training with Frozen Image Encoders and Large Language Models", arXiv, 15 June 2023 (2023-06-15), pages 1-13, XP093262451, Ithaca, NY Retrieved from the Internet: URL:https://arxiv.org/abs/2301.12597 [retrieved on 2025-03-24] * pages 1, 3, 7; figure 1 * | 1-15 | INV. G06F16/55 G06F16/583 |

**TECHNICAL FIELDS SEARCHED (IPC)**

G06F

The present search report has been drawn up for all claims

| Place of search | Date of completion of the search | Examiner |
|---|---|---|
| The Hague | 24 March 2025 | Rameseder, Jonathan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WAH, C.** ; **BRANSON, S.** ; **WELINDER, P.** ; **PERONA, P.** ; **BELONGIE, S.** Tech. Rep. No. CNS-TR-2011-001. California Institute of Technology, 2011
- **KRAUSE, J.** ; **STARK, M.** ; **DENG, J.** ; **FEI-FEI, L.** 3D Object Representations for Fine-Grained Categorization. *4th International IEEE Workshop on 3D Representation and Recognition (3dRR-13)*, 2013, 1-7
- **SONG, H. O.** ; **XIANG, Y.** ; **JEGELKA, S.** ; **SAVARESE, S.** Deep metric learning via lifted structured feature embedding, CoRR abs/1511.06452. *arXiv preprint arXiv:1511.06452*, 2015
- **LIU, Z.** ; **LUO, P.** ; **QIU, S.** ; **WANG, X.** ; **TANG, X.** DeepFashion: Powering robust clothes recognition and retrieval with rich annotations. *Proceedings of the IEEE Conference on Computer Vision and Pattern Recognition (CVPR)*, June 2016
- **LI, J.** ; **LI, D.** ; **SAVARESE, S.** ; **HOI, S.** Blip-2: Bootstrapping language-image pre-training with frozen image encoders and large language models.. *arXiv preprint arXiv:2301.12597*, 2023
- **WAH, C.,** ; **BRANSON, S.** ; **WELINDER, P.** ; **PERONA, P.** ; **BELONGIE, S.** *The caltech-ucsd birds-200-2011 dataset*, 2011
- OpenAI, R.: Gpt-4 technical report.. *arxiv 2303.08774*
- **ROMBACH, R.** ; **BLATTMANN, A.** ; **LORENZ, D.** ; **ESSER, P.** ; **OMMER, B.** High-resolution image synthesis with latent diffusion models.. *Proceedings of the IEEE/CVF conference on computer vision and pattern recognition*, 2022, 10684-10695
- **PODELL, D.** ; **ENGLISH, Z.** ; **LACEY, K.** ; **BLATTMANN, A.** ; **DOCKHORN, T.** ; **MÜLLER, J** ; **ROMBACH, R**. Sdxl: Improving latent diffusion models for high-resolution image synthesis.. *arXiv preprint arXiv:2307.01952*, 2023
- **CARON, M.** ; **TOUVRON, H.** ; **MISRA, I.** ; **JÉGOU, H.** ; **MAIRAL, J.** ; **BOJANOWSKI, P.** ; **JOULIN, A.** Emerging properties in self-supervised vision transformers.. *Proceedings of the IEEE/CVF international conference on computer vision*, 2021, 9650-9660
- **DOSOVITSKIY, A.** ; **BEYER, L.** ; **KOLESNIKOV, A.** ; **WEISSENBORN, D.** ; **ZHAI, X.** ; **UNTERTHINER, T.** ; **HOULSBY, N.** An image is worth 16x16 words: Transformers for image recognition at scale.. *arXiv preprint arXiv:2010.11929.*, 2020

- **ERMOLOV, A.** ; **MIRVAKHABOVA, L.** ; **KHRULKOV, V.** ; **SEBE, N.** ; **OSELEDETS, I.** Hyperbolic vision transformers: Combining improvements in metric learning.. *Proceedings of the IEEE/CVF Conference on Computer Vision and Pattern Recognition*, 2022, 7409-7419
- **MADRY, A.** ; **MAKELOV, A.** ; **SCHMIDT, L.** ; **TSIPRAS, D.** ; **VLADU, A.** Towards deep learning models resistant to adversarial attacks. *arXiv preprint arXiv:1706.06083*, 2017
- LOTS about attacking deep features. **ROZSA, A.** ; **GÜNTHER, M.** ; **BOULT, T. E.** IEEE International Joint Conference on Biometrics (IJCB). IEEE, October 2017, 168-176
- On brightness agnostic adversarial examples against face recognition systems. **SINGH, I.** ; **MOMIYAMA, S.** ; **KAKIZAKI, K.** ; **ARAKI, T.** International Conference of the Biometrics Special Interest Group (BIOSIG). IEEE, September 2021, 1-5
- **WAH, C.** ; **BRANSON, S.** ; **WELINDER, P** ; **PERONA, P.** ; **BELONGIE, S.** *The caltech-ucsd birds-200-2011 dataset*, 2011
- **WAH, C.** ; **BRANSON, S.** ; **WELINDER, P.** ; **PERONA, P** ; **BELONGIE, S.** *The caltech-ucsd birds-200-2011 dataset*, 2011
- **WAH, C.** ; **BRANSON, S.** ; **WELINDER, P.** ; **PERONA, P.** ; **BELONGIE, S.** *The caltech-ucsd birds-200-2011 dataset*, 2011
- **KRAUSE, J. et al.** 3d object representations for fine-grained categorization. *Proceedings of the IEEE international conference on computer vision workshops*, 2013, 554-561
- **OH SONG et al.** Deep metric learning via lifted structured feature embedding. *Proceedings of the IEEE conference on computer vision and pattern recognition.*, 2016, 4004-4012
- **WU, C.Y. et al.** Sampling matters in deep embedding learning. *Proceedings of the IEEE international conference on computer vision.*, 2017, 2840-2848
- **ZHAI, A.** ; **WU, H.Y.** Classification is a strong baseline for deep metric learning. *arXiv preprint arXiv:1811.12649*, 2018
- **ROTH, K. et al.** Mic: Mining interclass characteristics for im-proved metric learning. *Proceedings of the IEEE/CVF International Conference on Computer Vision.*, 2019, 8000-8009

- **EI-NOUBY, A. et al.** Training vision transformers for image retrieval. *arXiv preprint arXiv:2102.05644*, 2021
- **TOUVRON, H. et al.** Training data-efficient image transformers & distillation through attention. *International conference on machine learning.*, 2021, 10347-10357
- **LI, J. et al.** Blip-2: Bootstrapping language-image pre-training with frozen image encoders and large language models. *arXiv preprint arXiv:2301.12597*, 2023
- **PODELL, D et al.** Sdxl: Improving latent diffusion models for high-resolution image synthesis. *arXiv preprint arXiv:2307.01952*, 2023